(19) Europäisches Patentamt / European Patent Office / Office européen des brevets

(11) EP 1 789 508 B1

(12) **FASCICULE DE BREVET EUROPEEN**

(45) Date de publication et mention de la délivrance du brevet:
**23.06.2010 Bulletin 2010/25**

(21) Numéro de dépôt: **05759645.4**

(22) Date de dépôt: **03.05.2005**

(51) Int Cl.:
***C09D 183/04*** *(2006.01)* ***C09D 183/02*** *(2006.01)*
***G02B 1/04*** *(2006.01)*

(86) Numéro de dépôt international:
**PCT/FR2005/050300**

(87) Numéro de publication internationale:
**WO 2006/021698 (02.03.2006 Gazette 2006/09)**

(54) **PROCEDE DE FABRICATION D'UN SUBSTRAT REVETU D'UNE COUCHE MESOPOREUSE ET SON APPLICATION EN OPTIQUE OPHTALMIQUE**

VERFAHREN ZUR HERSTELLUNG EINES MESOPORÖS BESCHICHTETEN SUBSTRATS UND DESSEN VERWENDUNG IN DER OPHTHALMOLOGISCHEN OPTIK

METHOD OF PRODUCING A SUBSTRATE WHICH IS COATED WITH A MESOPOROUS LAYER AND USE THEREOF IN OPHTHALMIC OPTICS

(84) Etats contractants désignés:
**AT BE BG CH CY CZ DE DK EE ES FI FR GB GR HU IE IS IT LI LT LU MC NL PL PT RO SE SI SK TR**

(30) Priorité: **03.08.2004 FR 0451767**

(43) Date de publication de la demande:
**30.05.2007 Bulletin 2007/22**

(73) Titulaire: **ESSILOR INTERNATIONAL COMPAGNIE GENERALE D'OPTIQUE**
**94227 Charenton cédex (FR)**

(72) Inventeurs:
- **MATHERON, Muriel**
  **F-75013 Paris (FR)**
- **BITEAU, John**
  **Treasure Island, FL 33706 (US)**
- **CANO, Jean-Paul**
  **F-31560 Saint Orens (FR)**
- **BOILOT, Jean-Pierre**
  **F-92360 Meudon la Forêt (FR)**
- **GACOIN, Thierry**
  **F-91440 Bure/Yvette (FR)**

(74) Mandataire: **Catherine, Alain et al**
**Cabinet Harlé & Phélip**
**7 rue de Madrid**
**75008 Paris (FR)**

(56) Documents cités:
**WO-A-00/39028 WO-A-03/024869**
**US-A- 5 858 457**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne d'une manière générale un procédé de fabrication d'un substrat, notamment en matière plastique revêtu d'une couche mésoporeuse et les substrats revêtus ainsi obtenus.

Plus particulièrement, la présente invention concerne un procédé de fabrication d'un substrat transparent, de préférence en une matière plastique transparente, telle qu'une lentille ou une ébauche de lentille optique ou ophtalmique, revêtu d'une couche mésoporeuse dont l'indice de réfraction est stable dans le temps, cette couche mésoporeuse constituant généralement une couche ayant un faible indice de réfraction, c'est-à-dire un indice de réfraction $n \leq 1,50$, de préférence $\leq 1,35$ ($\lambda$ = 633 nm, T = ambiante (20-25°C)).

La préparation de couches mésoporeuses a déjà été décrite dans l'état de l'art.

Les matériaux mésoporeux sont classiquement définis comme des matériaux comportant des pores dont le diamètre est compris entre 2 et 50 nm.

Le procédé classique de préparation de couches mésoporeuses consiste à préparer un sol de silice peu polymérisée, à partir d'un précurseur tel qu'un tétraalcoxysilane, en particulier le tétraéthoxysilane (TEOS), ce sol renfermant également de l'eau, un solvant organique, généralement polaire tel que l'éthanol et un agent tensio-actif, le plus souvent en milieu acide.

La concentration en agent tensio-actif est à ce stade largement inférieure à la concentration micellaire critique.

La solution est ensuite déposée sur un substrat. Au cours de ce dépôt, le solvant organique s'évapore, ce qui enrichit le film en eau, agent tensio-actif et silice, puis la concentration micellaire critique est atteinte. Le milieu solvant étant très polaire, les molécules d'agent tensio-actif se regroupent en amas, les micelles présentant vers le solvant leurs têtes polaires.

La silice, elle aussi très polaire entoure les micelles et l'on obtient ainsi une structuration du film.

L'évaporation se poursuivant, les micelles changent éventuellement de forme et s'auto-organisent en structures plus ou moins ordonnées, jusqu'au séchage du film.

Le matériau poreux est obtenu après élimination de l'agent tensio-actif.

Cette élimination peut se faire par calcination (chauffage à une température de l'ordre d'au moins 400°C, ou par des méthodes plus modérées (extraction par des solvants, UV/ozone, plasma).

A la place de la silice, il est possible d'utiliser d'autres oxydes précurseurs tels que des précurseurs métalliques, par exemple à base de titane, de niobium, d'aluminium.

Les couches mésoporeuses décrites dans l'état de l'art présentent généralement des taux de porosité élevés, supérieurs à 40%, ces pores étant remplies d'air, et possèdent les propriété qui en découlent : indice de réfraction et coefficients diélectriques faibles, notamment.

Les applications préférentielles de ces films se situent dans le domaine de l'électronique.

Un des inconvénients de ces films est leur faible stabilité en présence d'une atmosphère chargée en humidité. Ces film ont une propension à se charger en eau au cours du temps, ce qui modifie leurs propriétés initiales.

Cette question de la stabilité des propriétés optiques des couches mésoporeuses est particulièrement importante si celles-ci doivent être utilisées dans des applications optiques, en particulier dans des empilements antireflets car, contrairement à des applications dans le domaine des semi-conducteurs, où l'on peut envisager une variation du coefficient diélectrique dans des limites prédéfinies sans affecter le fonctionnement du semi-conducteur, des variations très faibles d'indice de réfraction ont une conséquence immédiatement perceptible dans le domaine optique, par exemple en altérant la couleur et les performances d'un revêtement antireflet.

On trouve dans l'art antérieur de nombreuses techniques visant à améliorer la stabilité des films mésoporeux, en particulier leurs propriétés diélectriques.

Ces techniques comportent une étape de calcination du film à une température de 350-400°C.

Le brevet US5858457 décrit un procédé de préparation de films mésoporeux obtenus à partir d'un sol de TEOS, d'éthanol, d'eau et d'acide chlorhydrique. L'agent tensio-actif utilisé est le bromure de cétyltriméthylammonium $CH_3(CH_2)_{15}N(CH_3)_3Br$ (CTAB).

Les couches, après dépôt sont calcinées à 400°C.

Le brevet mentionne que d'autres techniques (par extraction de solvant) peuvent être utilisées.

Le brevet indique que ces films peuvent être utilisés en tant que revêtements optiques et qu'ils peuvent aussi être utilisés comme anti-reflets, sans donner plus de précisions sur la façon par laquelle la couche mésoporeuse pourrait accomplir cette fonction anti-reflets.

Il s'avère que les films obtenus selon la technique de ce brevet évoluent rapidement au cours du temps, en particulier en atmosphère humide et ne sont pas, en pratique, utilisables.

La demande de brevet WO03024869 décrit un procédé de préparation de couches mésoporeuses à partir d'un sol obtenu par réaction entre le TEOS et un alcoxysilane substitué par un groupement alkyle (tel que le méthyltriméthoxysilane) dans un ratio molaire inférieur à 3/1 et préférentiellement inférieur à 3/2.

Ce procédé améliore la stabilité des couches en limitant leur capacité à absorber de l'eau, tout en altérant peu

leurs propriétés mécaniques.

Les couches obtenues sont utilisées en tant que couches isolantes dans des semi-conducteurs ou pour leurs propriétés optiques dans des filtres à transmission.

Le document US2003157311 décrit la préparation de couches mésoporeuses à basse constante diélectrique à partir de sols précurseurs de TEOS en tant que premier agent précurseur et d'au moins un alcoxysilane organofonctionnel, en tant que second agent précurseur, tel qu'un fluoroalcoxysilane ou un alkyltrialcoxysilane, par exemple le méthyltriéthoxysilane.

D'une manière générale, le document US2003157311 divulgue des formulations dans lesquelles le ratio molaire premier agent précurseur /second agent précurseur peut varier de 0,05 à 1.

L'hydrolyse des alcoxysilanes est effectuée séquentiellement et de préférence en présence d'un acide organique tel que l'acide acétique et nécessite un vieillissement du sol obtenu (typiquement 5 jours).

Après dépôt du sol contenant les deux agents précurseurs, il est nécessaire de procéder à une étape de calcination (en l'occurrence à 425°C).

Le document décrit également, pour des faibles ratios des deux précurseurs ci-dessus (5%) un post-traitement du film après calcination, par traitement avec de l'hexaméthyldisilazane (HMDS), appliqué en phase liquide, suivi d'une étape de chauffage à 350°C.

Le but de ce post-traitement est de limiter la quantité d'eau adsorbée dans les pores du matériau mésoporeux, afin de conserver une constante diélectrique faible.

Un tel procédé n'apparaît pas adapté pour traiter des substrats organiques qui seraient dégradés par les températures de calcination.

Le document WO 9909383 décrit également le post-traitement d'un gel mésoporeux de TEOS avec un triméthylchlorosilane, après qu'un échange de solvant ait été effectué sur le gel.

Après le post-traitement, le gel est remis en solution sous l'effet d'un traitement aux ultrasons, déposé sur un substrat puis calciné une heure à 450°C.

Le matériau mésoporeux final obtenu est utilisé comme isolant thermique.

Tous ces procédés présentent une étape de calcination à une température élevée (de l'ordre de 400°C), qui les rendent inadaptés à la préparation de films mésoporeux sur des substrats organiques, et notamment les substrats organiques transparents tels que des lentilles optiques ou ophtalmiques.

Il serait donc souhaitable de disposer d'un procédé susceptible de convenir à tout type de substrat, et notamment des substrats transparents en matériaux organiques sensibles à une dégradation thermique.

Par ailleurs, il serait souhaitable de disposer de films mésoporeux qui présentent une stabilité accrue dans le temps, en particulier pour des applications dans le domaine de l'optique, et plus spécifiquement de l'optique ophtalmique, et notamment de films mésoporeux dont l'indice de réfraction soit stable dans le temps.

L'invention a donc pour objet de fournir un procédé de fabrication d'un substrat revêtu d'une couche mésoporeuse qui puisse s'appliquer à tous type de substrats et notamment à des substrats en matériaux organiques, en particulier thermiquement sensibles.

L'invention a aussi pour objet un procédé tel que ci-dessus permettant d'obtenir des films mésoporeux ayant un indice de réfraction stable dans le temps.

L'invention a encore pour objet un procédé tel que ci-dessus, dans lequel le film mésoporeux constitue la couche de bas indice de réfraction d'un revêtement bi-couche anti-reflets ou multicouche (multicouche signifiant ici un empilement de plus de deux couches).

L'invention a également pour objet un substrat revêtu d'une couche mésoporeuse, notamment de bas indice de réfraction, et plus particulièrement constituant la couche de bas indice de réfraction d'un revêtement bi-couche anti-reflets, ou multicouche anti-reflets, ou bien encore d'un miroir de Bragg.

Enfin, l'invention a pour objet un substrat revêtu d'une couche mésoporeuse telle que ci-dessus constituant une lentille optique ou ophtalmique.

Les buts ci-dessus sont atteints, selon l'invention, par un procédé de fabrication d'un substrat revêtu d'une couche mésoporeuse dont l'indice de réfraction est stable dans le temps, comprenant :

a) la préparation d'un sol précurseur d'une couche mésoporeuse comprenant un agent précurseur choisi parmi les composés de formule :

$$M(X)_4 \qquad (I)$$

dans laquelle, X est un groupe hydrolysable préférentiellement choisi parmi les groupes alcoxy, esters et halogènes, de préférence alcoxy, et M représente le silicium ou un métal tétravalent, de préférence le silicium, et leurs mélanges ; au moins un solvant organique ; au moins un agent porogène ; et de l'eau, et éventuellement un catalyseur d'hydrolyse des groupements X ;

b) le dépôt d'un film du sol précurseur sur une surface principale du substrat et la formation de la structure mésoporeuse du film déposé ;
c) optionnellement la consolidation de la structure mésoporeuse du film déposé ;
d) l'élimination de l'agent porogène ; et
e) la récupération du substrat revêtu de la couche mésoporeuse ;
le procédé étant caractérisé en ce que :

(i) l'élimination de l'agent porogène s'effectue à une température ≤ 150°C, de préférence ≤ 130°C, mieux ≤ 120°C et mieux encore ≤ 110°C ; et
(ii) le procédé comprend une étape d'introduction d'un agent réactif porteur d'au moins un groupe hydrophobe avant l'étape de dépôt (b) du film du sol précurseur et/ou après l'étape b).

Lorsqu'on effectue une étape c), l'introduction dudit agent réactif porteur d'au moins un groupe hydrophobe est réalisé après l'étape c).
Préférentiellement, l'introduction dudit agent réactif porteur d'un groupe hydrophobe est réalisée après l'étape d).
Par groupes « hydrophobes » on entend, dans le cadre de la présente invention, des combinaisons d'atomes qui ne sont pas susceptibles de s'associer (notamment par liaison H, Van der Waals, dipolaire) avec des molécules d'eau.
De préférence, le procédé selon l'invention ne comporte aucune étape s'effectuant à une température supérieure à 150°C, et en particulier l'étape de consolidation de la structure mésoporeuse (c) du film déposé comprend un chauffage à une température ≤ 150°C, de préférence ≤ 130°C, mieux ≤ 120°C et mieux encore ≤ 110°C.
Dans la suite de la description, on se référera à la figure 1 annexée qui représente un diagramme de phases de films MTEOS/TEOS synthétisés avec différentes quantités de MTEOS.
Les sols précurseurs de couches mésoporeuses sont connus et comprennent en général au moins un agent précurseur de formule (I) ou un hydrolysat de cet agent précurseur, au moins un solvant organique, un agent porogène et de l'eau, le milieu dans lequel se trouve l'agent précurseur de formule (I) étant en général un milieu acide, le caractère acide du milieu étant obtenu par addition, par exemple, d'un acide minéral, typiquement HCl.
Comme indiqué ci-dessus l'agent précurseur est choisi parmi les composés et mélanges de composés de formule :

$$M(X)_4 \qquad (I)$$

dans laquelle les groupes X, identiques ou différents, sont des groupes hydrolysables choisis parmi les groupes alcoxy, en particulier alcoxy en $C_1$-$C_4$, esters

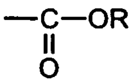

où R est un radical alkyle, préférentiellement en $C_1$-$C_6$, de préférence méthyle ou éthyle, et les halogènes tels que Cl, Br et I, et M est le silicium ou un métal tétravalent.
De préférence les groupes X sont des radicaux alcoxy, et en particulier méthoxy ou éthoxy, et mieux éthoxy.
Parmi les métaux tétravalents représentés par M on peut citer Ti, Zr, Sn.
M représente de préférence le silicium.
Le composé de formule (I) préféré est le tétraéthoxysilane $Si(OC_2H_5)_4$ (TEOS).
La quantité d'agent précurseur dans le sol représente en général de 10 à 30% en poids par rapport au poids total du sol précurseur.
Les solvants organiques ou mélange de solvants organiques convenant pour la préparation du sol précurseur selon l'invention sont tous des solvants classiquement utilisés, et plus particulièrement les solvants polaires, notamment les alcanols comme l'éthanol, le méthanol, l'isopropanol, l'isobutanol et le n-butanol et leurs mélanges.
En général, le solvant représente de 40 à 90% en poids par rapport au poids total du sol précurseur.
Le solvant préféré est l'éthanol.
L'agent porogène du sol précurseur peut être un agent porogène non tensio-actif ou tensio-actif.
Comme agents porogènes non tensio-actifs utilisables, on peut citer :

- le polyoxyde d'éthylène, de masse molaire comprise entre 50000 et 300000,
- le polyéthylèneglycol, de masse molaire comprise entre 50000 et 300000,
- la gamma-cyclodextrine, l'acide lactique,

- les sucres tels que le D-glucose, le maltose.

L'agent porogène tensio-actif du sol précurseur peut être constitué d'un unique composé tensio-actif ou d'un mélange de composés tensio-actifs. Les composés tensio-actifs peuvent être non ioniques, cationiques, anioniques ou amphotères.

Parmi les composés tensio-actifs préférés on peut citer le bromure de cétyltriméthylammonium (CTAB), le chlorure de cétyltriméthylammonium, les copolymères diblocs d'oxyde d'éthylène et d'oxyde de propylène, les copolymères triblocs d'oxyde d'éthylène et d'oxyde de propylène, les poly(oxyalkylènes)alkyléthers, notamment les poly(oxyéthylène)alkyléthers comme, par exemple, le polyoxyéthylène(10)stéaryléther, et les diols acétylèniques éthoxylés. Le composé tensio-actif préféré est le bromure de cétyltriméthylammonium.

Ces agents tensio-actifs sont pour la plupart disponibles dans le commerce comme, par exemple, les copolymères triblocs polyoxyéthylène-polyoxypropylène-polyoxyéthylène commercialisés par BASF sous la dénomination PLURONIC® et les poly(éthylènoxy)alkyl-éthers commercialisés par ICI sous les dénominations BRIJ 56® ($C_{16}H_{33}(OCH_2CH_2)_{10}OH$), BRIJ 58® ($C_{16}H_{33}(OCH_2CH_2)_{20}OH$) et BRIJ 76® ($C_{18}H_{37}(OCH_2CH_2)_{10}OH$).

En général, l'agent porogène représente de 2 à 10% du poids total du sol précurseur.

Typiquement, le rapport massique de l'agent porogène à l'agent précurseur de formule (I) et éventuellement l'agent réactif porteur de groupe hydrophobe lorsque celui-ci est ajouté au sol précurseur, varie de 0,01 à 5, de préférence de 0,05 à 1.

L'eau présente dans le sol précurseur généralement représente de 10 à 20% en poids du poids total du sol précurseur.

L'étape de dépôt (b) du film de sol précurseur sur la surface principale du substrat, que le sol précurseur ait été ou non traité au moyen d'un agent réactif porteur d'au moins un groupe hydrophobe, peut se faire par tout procédé classique, par exemple dépôt au trempé, dépôt par pulvérisation ou dépôt par centrifugation, de préférence par centrifugation.

De préférence, l'étape (b) de dépôt est effectuée dans une atmosphère présentant un taux d'humidité (HR) variant de 40 à 80%.

L'étape de consolidation (c) de la structure mésoporeuse du film de sol précurseur déposé consiste à éventuellement terminer l'élimination du solvant ou mélange de solvants organiques du film de sol précurseur et poursuivre la condensation des silanols présents dans le sol, généralement par chauffage. De préférence, l'étape (c) s'effectue par chauffage à une température ≤ 150°C, de préférence ≤ 130°C, mieux ≤ 120°C et mieux encore ≤ 110°C.

Comme indiqué précédemment, l'étape d'élimination de l'agent porogène (d) s'effectue à une température ≤ 150°C, de préférence ≤ 130°C, mieux ≤ 120°C et mieux encore ≤ 110°C.

Cette étape peut s'effectuer par extraction au moyen d'un solvant organique ou mélange de solvants organiques, d'un fluide à l'état supercritique (typiquement le $CO_2$ supercritique), dégradation au moyen d'un rayonnement UV et/ou d'ozone, traitement par plasma ou décharge corona. De préférence, l'élimination de l'agent porogène se fait par extraction. De préférence, l'extraction se fait au moyen d'un solvant en trempant le film mésoporeux formé et consolidé dans un solvant ou mélange de solvants de préférence organiques portés à une température ≤ 150°C. On peut utiliser tout solvant approprié ayant un point d'ébullition ≤ 150°C, de préférence ≤ 130°C, mieux ≤ 120°C et mieux encore ≤ 110°C. Les solvants préférés sont les alcanols, en particulier l'éthanol (reflux à 78°C), les alkylcétones, en particulier l'acétone (reflux à 56°C) et les chloroalkyles tels que le dichlorométhane.

L'extraction de l'agent porogène au moyen d'un solvant organique, préférentiellement au reflux, permet de conserver plus de groupes hydrophobes dans la couche mésoporeuse finale et un bon contrôle de l'épaisseur finale de la couche mésoporeuse.

L'agent réactif porteur d'au moins un groupement hydrophobe peut aussi être introduit lors de l'étape d), en particulier lorsqu'on utilise lors de cette étape d) un solvant d'extraction.

Selon un premier mode de réalisation de l'invention, l'étape d'introduction (ii) d'un agent réactif porteur d'au moins un groupe hydrophobe comprend l'introduction, avant l'étape de dépôt (b) du film, d'au moins un premier réactif porteur d'au moins un groupe hydrophobe et l'introduction après l'étape (b) ou (c) d'au moins un second réactif porteur d'au moins un groupe hydrophobe, différent du premier réactif.

Les premiers réactifs porteurs d'au moins un groupe hydrophobe sont préférentiellement ajoutés directement dans le sol précurseur, généralement sous forme de solution dans un solvant organique et sont préférentiellement choisis parmi les composés et les mélanges des composés de formules :

$$(R^1)_{n1}\,(R^2)_{n2}\,Si \quad \text{(II)} \qquad \text{ou} \qquad (R^3)_{n3}\,(R^4)_{n4}\,Si{-}R'{-}Si\,(R^5)_{n5}\,(R^6)_{n6} \quad \text{(III)}$$

dans lesquelles :

- $R^1$, $R^3$ et $R^5$ représentent un groupe hydrocarboné saturé ou non, de préférence en $C_1$-$C_8$ et mieux en $C_1$-$C_4$, par exemple un groupe alkyle, tel que méthyle ou éthyle, un groupe vinyle, un groupe aryle, par exemple phényle, éventuellement substitué, notamment par un ou plusieurs groupes alkyles en $C_1$-$C_4$ ; et les groupes analogues fluorés ou perfluorés du groupe hydrocarboné ;
- $R^2$, $R^4$ et $R^6$ représentent un groupe hydrolysable, préférentiellement choisis parmi les groupes alcoxy, en particulier alcoxy en $C_1$-$C_4$, esters

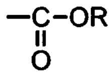

où R est un radical alkyle, préférentiellement en $C_1$-$C_6$, en particulier méthyle ou éthyle, et les halogènes tels que Cl, Br et I ;
- R' représente un groupement alkylène tel que $-CH_2-$, $-CH_2-CH_2-$, arylène tel que phénylène ;
- $n_1$ est un entier de 1 à 3 ;
- $n_2$ est un entier de 1 à 3 ;
- $n_1 + n_2 = 4$ ;
- $n_3$, $n_4$, $n_5$, et $n_6$ sont des entiers de 0 à 3 à la condition que les sommes $n_3 + n_5$ et $n_4 + n_6$ soient différentes de zéro ; et
- $n_3 + n_4 = n_5 + n_6 = 3$.

De préférence $R^1$, $R^3$ et $R^5$ représentent le groupe méthyle et $R^2$, $R^4$ et $R^6$ représentent un groupe alcoxy, notamment méthoxy ou éthoxy.

Les premiers réactifs hydrophobes préférés sont les alkyltrialcoxysilanes, tel que le méthyltriéthoxysilane (MTEOS), les vinyltrialcoxysilanes, tel que le vinyltriéthoxysilane, les fluoroalkyltrialcoxysilanes tel que le 3,3,3 trifluoropropyltrimethoxysilane.

Le premier réactif porteur d'au moins un groupement hydrophobe particulièrement préféré est le méthyltriéthoxysilane (MTEOS) $CH_3(OC_2H_5)_3Si$.

En général, le rapport molaire du premier agent réactif à groupe hydrophobe à l'agent précurseur de formule (I) varie de 10/90 à 50/50 et est de préférence de 20/30, notamment lorsqu'on utilise le MTEOS comme premier réactif hydrophobe dans le sol précurseur.

Un procédé particulièrement recommandé pour l'incorporation est un procédé en deux étapes, comprenant une première étape d'hydrolyse en milieu acide, et de condensation du composé $M(X)_4$ tel que défini précédemment, suivi d'une deuxième étape de mélange avec le premier agent réactif à groupe hydrophobe.

L'intérêt d'une telle hydrolyse en deux étapes est de pouvoir introduire des quantités élevées de premier agent réactif hydrophobe et atteindre un rapport molaire du premier agent réactif à groupe hydrophobe à l'agent précurseur de formule (I) de 50/50, en préservant une structure ordonnée de la couche mésoporeuse.

L'hydrolyse est effectuée en milieu acide, en ajoutant de l'eau à un pH préférentiellement compris entre 1 et 2.

Lors de la première étape, l'hydrolyse du composé $M(X)_4$ est de préférence effectuée en présence d'un léger excès d'eau, typiquement une quantité d'eau de plus de 1 à 1,5 fois la quantité molaire d'eau nécessaire pour une hydrolyse stoechiométrique des groupements hydrolysables du composé $M(X)_4$.

On laisse ensuite la réaction se poursuivre (vieillissement du sol). Au cours de cette opération, le sol est préférentiellement maintenu à une température de l'ordre de 50 à 70°C, typiquement 60°C, pendant 30 minutes à 2 heures.

On peut aussi opérer la condensation à des températures plus basses, mais avec des temps de condensation plus longs.

De préférence encore, le sol précurseur doit être déposé et le film de sol précurseur formé rapidement après introduction du premier réactif hydrophobe, préférentiellement dans un temps de 5 minutes ou moins, et mieux dans un temps de deux minutes ou moins.

Procéder dans ce délai très court permet de minimiser la réaction de condensation du premier réactif avant le dépôt et la formation de la couche mésoporeuse.

En d'autres termes, on induit simplement une hydrolyse partielle du premier réactif hydrophobe sans induire une formation significative d'espèces condensées provenant du premier réactif.

L'introduction du second réactif hydrophobe ou du second mélange de réactifs hydrophobes s'effectue de préférence par contact du second réactif ou mélange de réactifs hydrophobes à l'état liquide ou de vapeur, de préférence de vapeur, avec la couche mésoporeuse obtenue après élimination de l'agent porogène.

En alternative, le second réactif hydrophobe ou mélange de réactifs hydrophobes peut être introduit lors de

l'étape (d) ; en particulier lorsque l'on utilise un solvant d'extraction, le second réactif hydrophobe ou mélange de réactifs hydrophobes peut être solubilisé dans le solvant d'extraction.

Les seconds réactifs porteurs d'au moins un groupe hydrophobe convenant particulièrement pour la présente invention sont les composés, préférentiellement du silicium, comportant une seule fonction capable de réagir avec les groupes hydroxyles restants de la couche mésoporeuse, en particulier les fonctions Si-Cl, Si-NH-, Si-OR où R est un groupement alkyle, de préférence en $C_1$-$C_4$.

Les fonctions hydrophobes préférées des composés de silicium sont des groupements alkyles, préférentiellement méthyles, des groupements alkyles, aryles, fluoroalkyles, perfluoroalkyles.

Comme second réactif, on peut utiliser avantageusement un chlorosilane fluoré tel que le 3,3,3 trifluoropropyldiméthyl chlorosilane, un alkylalkoxysilane tel que le triméthylméthoxysilane.

Dans un mode préféré de réalisation, le second réactif porteur de groupements hydrophobes est un trialkylsilyle, préférentiellement un triméthysilyle, un silazane, en particulier un disilazane et tout particulièrement l'héxaméthyldisilazane $(CH_3)_3$-Si-NH-Si$(CH_3)_3$ (HMDS).

Le triméthylchlorosilane peut aussi avantageusement être employé comme second réactif hydrophobe.

Selon un second mode de réalisation, l'introduction du réactif ou mélange de réactifs hydrophobes s'effectue uniquement après l'étape d'élimination (d) de l'agent porogène, de la même manière et avec les mêmes seconds réactifs hydrophobes que décrit précédemment. Dans cette seconde réalisation, à l'exception du fait qu'il n'y a pas d'introduction de premier réactif hydrophobe dans le sol précurseur, le procédé est le même que celui décrit précédemment.

La structure de la couche mésoporeuse selon l'invention peut être ordonnée ou non.

Préférentiellement, la structure de la couche mésoporeuse est ordonnée.

D'une manière générale, une structure ordonnée confère de meilleures propriétés mécaniques et permet une plus grande reproductibilité du procédé.

La structure ordonnée peut être notamment de type hexagonale 3d, cubique ou hexagonale 2d.

La structure de type hexagonale 3d est préférée.

Par structure ordonnée, on entend une structure présentant une organisation périodique dans une épaisseur d'au moins 20nm, et dans une zone de dimension d'au moins 20nm, préférentiellement 300 nm dans le plan de la couche déposée.

En choisissant le ratio massique

$$\frac{[\text{agent porogène}]}{[MX_4]}$$

dans l'étape (a), il est possible d'obtenir différents types de structures ordonnées pour le film final.

En particulier, lorsque l'agent porogène est le CTAB et le composé $MX_4$ le TEOS, en l'absence d'ajout d'un agent réactif porteur d'un groupement hydrophobe avant l'étape (b), on obtient :

- une structure hexagonale 3d (H3D) pour un ratio massique

$$0{,}140 \leq (CTAB/TEOS) \leq 0{,}175$$

- une structure cubique (C) pour un ratio massique

$$0{,}210 \leq (CTAB/TEOS) \leq 0{,}245$$

- une structure hexagonale 2d (H2D) pour un ratio molaire

$$0{,}280 \leq (CTAB/TEOS) \leq 0{,}350$$

Préférentiellement, les couches mésoporeuses obtenues selon le procédé de l'invention présentent une structure hexagonale 3d.

En présence d'un agent hydrophobe MTEOS ajouté avant l'étape (b), dans un rapport molaire MTEOS/TEOS = 1, les ratios massiques cités ci-dessus évoluent sensiblement :

- structure hexagonale 3d:

$$0,210 \leq (CTAB/TEOS) \leq 0,280$$

- structure cubique:

$$0,297 \leq (CTAB/TEOS) \leq 0,332$$

- structure hexagonale 2d:

$$0,350 \leq (CTAB/TEOS) \leq 0,385$$

Lorsque le rapport molaire MTEOS/TEOS dépasse 1, les films ne sont plus structurés.

Lorsque le rapport molaire MTEOS/TEOS est inférieur à 1, la couche mésoporeuse selon l'invention présente une structure de type hexagonale 3d, cubique, et hexagonale 2d. Les rapports molaires CTAB/TEOS délimitant les phases se déplacent vers des valeurs d'autant plus élevées que le rapport molaire MTEOS/TEOS croît.

La couche mésoporeuse selon l'invention a en général une épaisseur allant de 100 à 500 nm, de préférence de 150 à 400 nm. Elle présente, typiquement un bas indice de réfraction, c'est-à-dire un indice de réfraction ≤ 1,50 ($\lambda$ = 633 nm, T = 20-25°C) et de préférence de 1,20 à 1,35.

Le substrat peut être constitué de tout matériau solide, transparent ou non transparent, tels que du verre minéral, une céramique, une vitrocéramique, un métal ou une matière plastique thermoplastique ou thermodurcissable (verre organique). De préférence, le substrat est en un matériau transparent et mieux une matière plastique transparente.

Parmi les matériaux thermoplastiques convenant pour les substrats, on peut citer les (co)polymères (méth) acryliques, en particulier le poly(méthacrylate de méthyle) (PMMA), le polyvinylbutyral (PVB), les polycarbonates (PC), les polyuréthanes (PU), les poly(thiouréthanes), les (co)polymères d'allylcarbonate de polyols, les copolymères thermoplastiques éthylène/acétate de vinyle, les polyesters comme le poly(téréphtalate d'éthylène) (PET) ou le poly(téréphtalate de butylène) (PBT), les polyépisulfures, les polyépoxydes, les copolymères polycarbonates/polyesters, les copolymères de cyclooléfines tels que les copolymères éthylène/norbornènes ou éthylène/cyclopentadiène et leurs combinaisons.

Parmi les substrats préférés selon l'invention, on peut citer des substrats obtenus par polymérisation des méthacrylates d'alkyle, en particulier des méthacrylates d'alkyle en $C_1$-$C_4$, tels que le méthyl(méth)acrylate et l'éthyl (méth)acrylate, des dérivés allyles tels que les allyles carbonates de polyols aliphatiques ou aromatiques, linéaires ou ramifiés, des thio(méth)acrylates, de mélanges précurseurs polythiols/polyisocyanate (pour l'obtension de polythiouréthane), des épisulfures, des (méth)acrylates aromatiques polyéthoxylés tels que les bisphénols diméthacrylates polyéthoxylés.

Comme substrats convenables, on peut également citer les polycarbonates (PC).

Parmi les substrats recommandés, on peut citer des substrats obtenus par (co)polymérisation des allyl carbonates de polyols, on peut citer les (co)polymères d'éthylèneglycol bis allyl carbonate, de diéthylèneglycol bis 2-méthyl carbonate, de diéthylèneglycol bis (allyl carbonate), d'éthylèneglycol bis (2-chloro allyl carbonate), de triéthylèneglycol bis (allyl carbonate), de 1,3-propanédiol bis (allyl carbonate), de propylèneglycol bis (2-éthyl allyl carbonate), de 1,3-butènediol bis (allyl carbonate), de 1,4-butènediol bis (2-bromo allyl carbonate), de dipropylèneglycol bis (allyl carbonate), de triméthylèneglycol bis (2-éthyl allyl carbonate), de pentaméthylèneglycol bis (allyl carbonate), d'isopropylène bis phénol-A bis (allyl carbonate).

Les substrats particulièrement recommandés sont les substrats obtenus par (co)polymérisation du bis allyl carbonate du diéthylèneglycol, vendu, par exemple, sous la dénomination commerciale CR 39® par la société PPG Industries (lentilles ORMA® ESSILOR).

Parmi les substrats également particulièrement recommandés, on peut citer les substrats obtenus par polymérisation des monomères thio(méth)acryliques, tels que ceux décrits dans la demande de brevet français FR-A-2 734 827 et les polycarbonates.

Bien évidemment, les substrats peuvent être obtenus par polymérisation de mélanges des monomères ci-dessus, ou encore comprendre des mélanges de ces polymères et (co)polymères

La couche mésoporeuse peut être formée sur une surface d'un substrat nu, c'est-à-dire non revêtu ou sur une surface principale déjà revêtue d'un ou plusieurs revêtements fonctionnels.

Ainsi, en optique ophtalmique, il est bien connu de revêtir une surface principale d'un substrat en matériau

organique transparent, par exemple une lentille ophtalmique, avec un ou plusieurs revêtements fonctionnels pour améliorer les propriétés optiques et/ou mécaniques de la lentille finale. Aussi, la surface principale du substrat peut être préalablement pourvue d'un revêtement de primaire améliorant la résistance au choc et/ou l'adhésion des couches ultérieures dans le produit final, d'un revêtement résistant à l'abrasion, d'un revêtement anti-reflets, d'un revêtement polarisé, d'un revêtement photochromique, d'un revêtement coloré ou d'un empilement de deux ou plus de ces revêtements.

Les revêtements de primaire améliorant la résistance au choc sont de préférence des latex de polyuréthane ou acrylique.

Les revêtements durs résistant à l'abrasion sont de préférence des revêtement à base de poly(méth)acrylates ou de silicones.

Parmi les revêtements durs anti-abrasion recommandés dans la présente invention, on peut citer les revêtements obtenus à partir de compositions à base d'hydrolysat de silane, en particulier d'hydrolysat d'époxysilane telles que celles décrites dans la demande de brevet français n° 93 026 49 et dans les brevets US 4,211,823 et US 5,015,523.

Une composition pour revêtement anti-abrasion préférée, comprend un hydrolysat d'époxysilane et de dialkyldialcoxysilane, de la silice colloïdale et une quantité catalytique d'acétylacétonate d'aluminium, le reste étant essentiellement constitué par des solvants classiquement utilisés pour la formulation de telles compositions.

Préférentiellement l'hydrolysat utilisé est un hydrolysat de $\gamma$-glycidoxypropyltriméthoxysilane (GLYMO) et de diméthyldiéthoxysilane (DMDES).

Dans une réalisation préférée de l'invention, la couche mésoporeuse est formée sur une couche de haut indice de réfraction (HI, $n > 1,50$), préalablement déposée sur le substrat, et forme ainsi une couche de bas indice de réfraction (BI) d'un revêtement bi-couche anti-reflets. La couche HI est de préférence obtenue par durcissement d'une composition comprenant un hydrolysat d'un alcoxylane, en particulier d'un epoxysilane, préférentiellement un époxytrialcoxysilane et de colloïdes haut indice de réfraction ou de précurseurs de ceux-ci.

En particulier, les colloïdes peuvent être des colloïdes de $TiO_2$, $ZrO_2$, $Sb_2O_5$, $SnO_2$, $WO_3$, $Al_2O_3$.

Cette couche HI présente un indice de réfraction supérieur à 1,50, préférentiellement supérieur à 1,7, mieux de 1,72 à 1,82 et mieux encore de 1,72 à 1,78.

Son épaisseur peut varier selon l'empilement anti-reflets de typiquement 10-200 nm, préférentiellement 80 à 150 nm.

Cette couche HI peut être une couche HI d'un empilement anti-reflets comprenant plusieurs couches alternées de haut indice de réfraction et bas indice de réfraction, notamment lorsque l'empilement anti-reflets est multicouche.

La couche mésoporeuse selon l'invention est elle-même, lorsqu'elle constitue la couche externe de l'empilement anti-reflets, de préférence recouverte d'une couche hydrophobe et/ou oléophobe (top coat) dont l'épaisseur est en général inférieure à 10 nm. Ces revêtements hydrophobes et/ou oléophobes sont bien connus dans la technique et sont généralement fabriqués à partir de fluorosilicone ou fluorosilazane, c'est-à-dire des silicones ou des silazanes contenant des groupes fluor. Un matériau de revêtement hydrophobe et/ou oléophobe préféré est commercialisé par SHIN ETSU sous la dénomination KP801M®. Ces revêtements sont généralement obtenus par des techniques classique d'évaporation thermique.

Une autre classe de fluorosilanes préférés pour former des top coats sont ceux contenant des groupements fluoropolyéthers décrits dans le brevet US 6,277,485.

Ces fluorosilanes répondent à la formule générale :

$$Rf\text{-}[R'^{1}\text{-}SiY_{3-x}R'^{2}_{x}]_{y}$$

où Rf est un groupe perfluoropolyéther monovalent ou divalent ; $R'^1$ est un groupe divalent alkylène, arylène ou une combinaison de ceux-ci, contenant éventuellement un ou plusieurs hétéroatomes ou groupes fonctionnels et éventuellement substitués par des halogènes, et contenant de préférence 2 à 16 atomes de carbone ; $R'^2$ est un groupe alkyle inférieur (c'est-à-dire un groupe alkyle $C_1$-$C_4$) ; Y est un halogène, un groupe alcoxy inférieur (c'est-à-dire une groupe alcoxy en $C_1$-$C_4$, de préférence méthoxy ou éthoxy), ou un groupe acyloxy inférieur (c'est-à-dire -OC(O)$R'^3$ où $R'^3$ est un groupe alkyle en $C_1$-$C_4$) x est 0 ou 1 ; et y est 1 (Rf est monovalent) ou 2 (Rf est divalent).

Les composés appropriés ont en général une masse molaire moyenne en nombre d'au moins 1000. De préférence, Y est un groupe alcoxy et Rf est un groupe perfluoropolyéther.

D'autres fluorosilanes recommandés sont ceux de formule :

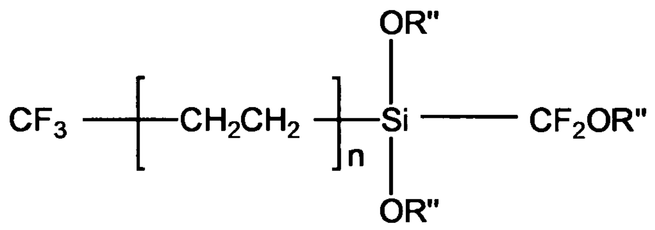

Où n = 5, 7, 9 ou 11 et R" est un radical alkyle, de préférence en $C_1$-$C_6$ tel que $-CH_3$, $-C_2H_5$ et $-C_3H_7$ ; $CF_3CH_2CH_2SiCl_3$ ;

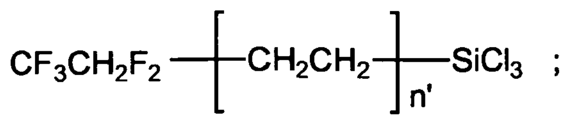

et

$CF_3CH_2F_2CH_2CH_2$-SiR"$Cl_2$

où n' = 7 ou 9 et R" est tel que défini ci-dessus.

Des fluorosilanes également recommandés sont des fluoropolymères à groupements organiques décrits dans le brevet US 6,183,872.

Des fluoropolymères à groupements organiques porteurs de groupes Si sont représentés par la formule générale suivante et présentent un poids moléculaire de $5.10^2$ à $1.10^5$ :

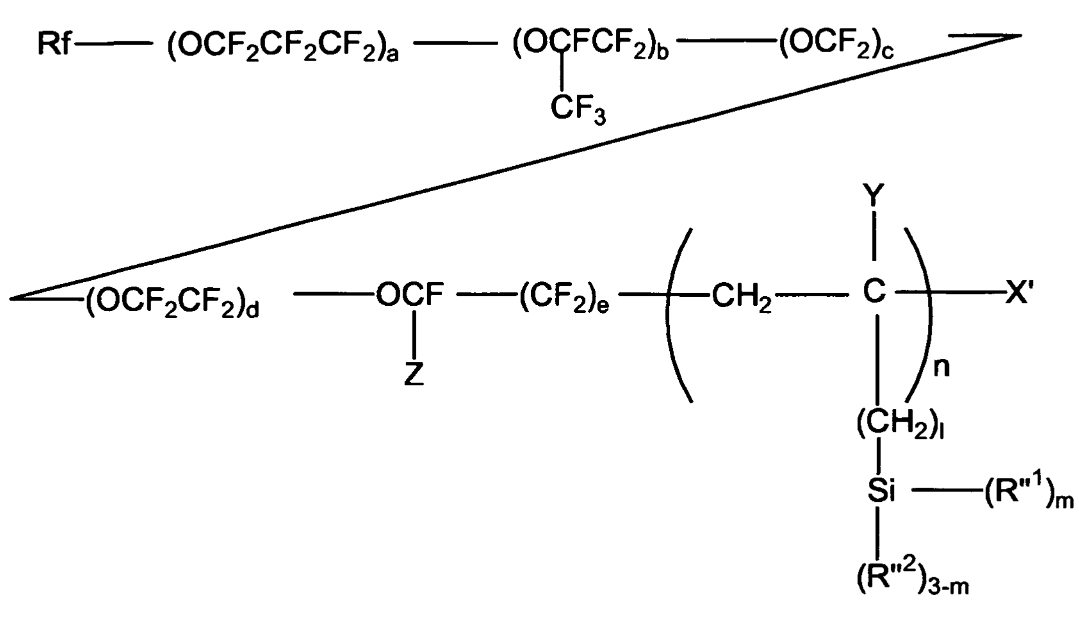

dans laquelle Rf représente un groupement perfluoroalkyle ; Z représente un groupement fluoro ou trifluorométhyle ; a, b, c, d et e représentent chacun, indépendamment l'un de l'autre, 0 ou un entier supérieur ou égal à 1, à la condition que la somme a+b+c+d+e ne soit pas inférieure à 1 et que l'ordre des unités répétitives figurant entre les parenthèses indexées sous a, b, c, d et e ne soit pas limité à celui représenté ; Y représente H ou un groupement alkyle comprenant de 1 à 4 atomes de carbone ; X' représente un atome d'hydrogène, de brome ou d'iode ; $R''^1$ représente un groupement hydroxy ou un groupement hydrolysable ; $R''^2$ représente un atome d'hydrogène ou un groupement hydrocarboné monovalent ; l représente 0, 1 ou 2 ; m représente 1, 2 ou 3 ; et n représente un entier au moins égal à 1, préférentiellement au moins égal à 2.

Les couches mésoporeuses selon l'invention trouvent application dans des domaines très divers : lentilles optiques, en particulier lentilles ophtalmiques, notamment verres de lunettes, optique guidée, réseaux de diffraction,

miroirs de Bragg, les isolants pour la micro électronique, membranes de filtration, phases stationnaires de chromatographie.

Les exemples ci-dessous illustrent la présente invention. Sauf indication contraire, tous les pourcentages sont exprimés en poids.

Exemple 1 : Couches mésoporeuses à base de TEOS modifiées par greffage post synthèse.

**1. a. Elaboration du sol précurseur**

* Réactifs

TEOS : $Si(OC_2H_5)_4$
Ethanol absolu
Acide chlorhydrique dilué pH=1,25
CTAB (tensioactif) : $C_{16}H_{33}N^+(CH_3)_3$, $Br^-$

* Préparation du sol inorganique

Le TEOS est hydrolysé puis partiellement condensé par chauffage pendant 1h à 60°C en milieu éthanol/acide chlorhydrique dilué, dans un ballon muni d'un réfrigérant. Les rapports molaires sont les suivants :

| TEOS | Ethanol | $H_2O$ (1) |
|---|---|---|
| 1 | 3,8 | 5 |
| (1) eau à pH 1,25( acidifiée avec de l'acide chlorhydrique) | | |

* Préparation d'une solution de tensioactif dans l'éthanol et mélange avec le sol inorganique

Le CTAB est dissous dans l'éthanol par passage aux ultrasons pendant quelques secondes. On ajoute le sol inorganique une fois refroidi. Cette étape est réalisée de telle sorte que dans le mélange final le rapport molaire CTAB/Si vale 0,10. Le volume d'éthanol utilisé pour dissoudre le CTAB est égal au volume de sol introduit.

**1. b. Dépôt du sol précurseur**

Substrat utilisé : plaque de silicium 2,5cm x 2,5cm.

Quelques gouttes du mélange sont déposées sur le substrat, qui est ensuite mis en rotation à 3000 t/mn pendant 2 minutes (accélération d'environ 33 $t/s^2$). Le dépôt a lieu dans une enceinte dont l'hygrométrie est contrôlée grâce à un flux d'azote qui vient buller dans un réservoir d'eau. Il faut se placer en atmosphère suffisamment humide (HR > 60 %, avec un débit d'azote soutenu), sinon l'organisation des micelles de CTAB en une structure périodique avec de grands domaines de cohérence ne se produit pas correctement.

Les substrats obtenus sont divisés en deux lots.

**1. c. Consolidation de la structure mésoporeuse**

Les substrats revêtus du film de sol précurseur du premier lot sont chauffés à 110°C pendant 12 heures pour consolider la structure mésoporeuse, qui est une structure hexagonale 3d.

**1. d. Elimination du tensio-actif.**

Le tensio-actif est éliminé par calcination (comparatif) ou par extraction avec un solvant organique (invention).

• Calcination

La calcination est effectuée sur des substrats du 2$^{éme}$ lot, non soumis à l'étape 1 c).

Le tensioactif est dégradé par calcination à 450°C, sous air : montée à 200°C en 1 h40, montée à 300°C en 3h20, palier d'une heure, montée à 450°C en 2h30, palier d'une heure.

• Extraction par solvant

L'extraction est effectuée sur des substrats du 1 er lot, après l'étape c).

Il s'agit de solubiliser le CTAB, en trempant le film soit dans l'éthanol au reflux (78°C) pendant 5h, soit dans l'acétone au reflux (56°C) pendant 2h. Ces traitements sont tous deux précédés de la consolidation thermique à 110°C pendant 12h.

La structure hexagonale 3d est conservée après l'élimination du CTAB.

Avec ces deux manières d'éliminer le tensioactif, la structure périodique est préservée, avec une certaine déformation. Le film obtenu est extrêmement poreux (fraction de vide d'environ 55%). Il comporte à la fois des mésopores bien calibrés, de 4 nm de diamètre (empreinte des micelles), et des microspores, de quelques angstroems, situés à l'intérieur des parois de silice et a priori non monodisperses.

**1. e. Indice de réfraction final après élimination du tensioactif**

L'indice est mesuré par ellipsométrie spectroscopique entre 1,5 et 5 eV, avec un angle d'incidence fixe (proche de 70°). La mesure est effectuée sur un ellipsomètre Jobin-Yvon, dans les configurations II et III (modulateur à 0° et analyseur à 45° puis modulateur à 45° et analyseur à 45°). La couche mésoporeuse, déposée sur substrat de silicium, est modélisée par un milieu effectif de Bruggeman à deux composants (silice + vide). Par la suite, les valeurs d'indice seront données pour $\lambda$ = 633nm, à T = 20-25°C.

| Méthode d'extraction | Calcination | Ethanol | Acétone |
|---|---|---|---|
| Indice | 1,23 | 1,29 | 1,27 |

**1. f. Traitement des couches mésoporeuses avec un agent hydrophobe**

<u>* Procédure de greffage du HMDS</u>

Silane utilisé : hexaméthyldisilazane (HMDS) $(CH_3)_3$-Si-NH-Si-$(CH_3)_3$.

Le film mésoporeux est introduit dans un schlenk avec 200 $\mu$L de HMDS. L'ensemble est placé sous vide primaire (1 à 5 mm de Hg) statique, puis chauffé à 70°C pendant 5 minutes.

Le greffage du HMDS, selon la méthode ci-dessus, a lieu immédiatement après la sortie du four (calcination) ou immédiatement après l'extraction (extraction avec un solvant organique).

Le film conserve sa structure hexagonale 3d.

**1. g. Indice et stabilité**

Les substrat revêtus sont laissés à l'ambiante et l'éventuelle évolution de l'indice de réfraction ($\lambda$ = 633nm, T = 20-25°C) des couches mésoporeuses est suivie par ellipsométrie spectroscopique, en comparaison avec un film de TEOS calciné non greffé.

| | Indice à t=0 | Indice à t=4j | Indice à t=11j | Indice à t=22j |
|---|---|---|---|---|
| Film TEOS calciné (comparatif) | 1,23 | 1,26 | 1,30 | 1,31 |
| Film TEOS calciné puis greffé au HMDS (comparatif) | 1,28 | 1,29 | 1,30 | 1,32 |
| Film TEOS extrait à l'acétone puis greffé au HMDS | 1,32 | 1,32 | 1,32 | 1,32 |

Le tableau montre que la couche mésoporeuse obtenue par le procédé de l'invention présente une stabilité remarquable de son indice de réfraction. Cette couche est de qualité optique.

<u>Exemple 2</u> : Couches mésoporeuses à base de TEOS modifiées lors de la synthèse et par greffage post-synthèse.

Les substrats de base sont les mêmes que dans l'exemple 1.

**2. a. Elaboration du sol précurseur**

Le sol de silice élaboré dans l'exemple 1 est constitué de petits amas polymériques de silice partiellement condensée, comportant une grande quantité de fonctions silanols. Celles-ci vont disparaître lorsque le MTEOS sera introduit dans le mélange. On a donc conçu cette synthèse de telle sorte que l'ensemble {amas polymérique de silice + MTEOS} reste suffisamment hydrophile pour ne pas perturber l'équilibre hydrophile-hydrophobe du système (en effet, le MTEOS polymérisé est hydrophobe, contrairement au MTEOS hydrolysé et non condensé).

Dans la synthèse exposée ci-dessous, les rapports molaires CTAB/TEOS et MTEOS/TEOS valent respectivement 0,16 et 2/3.

* Préparation du sol de silice

Le TEOS est hydrolysé et condensé suivant la méthode décrite à l'exemple 1. Le sol obtenu est refroidi à 0°C dans un bain de glace.

* Préparation de la solution de tensioactif et ajout du MTEOS

D'autre part, on prépare une solution-stock à 48,7 g/L de CTAB dans l'éthanol. On en prélève 6,7 mL, puis on y ajoute 0,75 mL de MTEOS pur.

* Mélange silice/MTEOS/tensioactif

On transfère 3 mL du sol de silice dans un flacon plongé dans un bain de glace, et on y ajoute 67 μL d'eau acidifiée (HCl pH=1,25). On additionne alors le tout au mélange CTAB/éthanol/MTEOS sous agitation.

**2. b. Dépôt du sol précurseur**

1 minute 30 plus tard, on dépose quelques gouttes du mélange sur le substrat, qui est alors mis en rotation à 3000 t/mn pendant 2 minutes (accélération d'environ 33 tours/$s^2$). Le dépôt a lieu dans une enceinte balayée par un fort flux d'azote et dont l'atmosphère a une humidité relative égale à 51 % à T = 20-25°C.

**2. c. Consolidation de la structure mésoporeuse**

Les substrats revêtus du film de sol précurseur sont chauffés à 110°C pendant 12 heures pour consolider la structure mésoporeuse (condensation entre les silanols).

* Structure obtenue

Les films obtenus, dont l'épaisseur est d'environ 260 nm, ont une structure hexagonale 3d.

**2. d. Elimination du tensio-actif**

Le tensio-actif est éliminé par extraction avec un solvant organique.
Le film est placé dans l'acétone au reflux pendant 2 heures.

**2. e. Traitement des couches mésoporeuses avec un agent hydrophobe**

Après extraction avec l'acétone du tensio-actif, les couches mésoporeuses sont immédiatement greffées avec du HMDS selon la procédure précédemment décrite.
On conserve la structure hexagonale 3d.
Les substrats revêtus sont conservés à l'ambiante et l'évolution de l'indice de réfraction des couches mésoporeuses est déterminée.

| | Indice à t=0 | Indice à t=2j | Indice à t=11j | Indice à t=11 semaines |
|---|---|---|---|---|
| MTEOS/TEOS Extraction à l'acétone puis greffage HMDS | 1,30 | 1,30 | 1,30 | 1,31 |

On arrive ainsi à obtenir une couche bas indice stable (sur une certaine plage de temps) au moyen de traitements doux compatibles avec les substrats et vernis utilisés pour l'élaboration de verres ophtalmiques.

On a également reproduit l'exemple 2 avec différentes quantités de MTEOS et différentes quantités de CTAB et formé les films correspondants.

On a ainsi pu tracer le diagramme de phases du système ternaire MTES-TEOS-CTAB.

Celui-ci est représenté en figure 1.

Ce diagramme fait apparaître l'existence de 3 phases, selon les ratios molaires CTAB/TEOS et MT(ratio MTEOS/TEOS).

Au delà d'un ratio MT de 1, on n'observe plus de structuration.

Exemple 3 : Introduction d'un agent réactif à groupe hydrophobe concomitante de l'élimination de l'agent porogène (après l'étape de dépôt b) :greffage du triméthylméthoxysilane $(CH_3)_3SiOCH_3$ (TMMOS) dans la méthyléthylcétone $CH_3$-CO-$CH_2CH_3$ (MEK) ; élimination simultanée du CTAB

Cet exemple décrit une procédure de greffage d'un agent hydrophobe qui est introduit au moment de l'étape (d).

On reproduit à l'identique les étapes a), b) et c) de l'exemple 1.

Un film de silice mésoporeuse de structure hexagonale 3d, structuré par le CTAB obtenu après les étapes a) et b) (environ 4 $cm^2$, épaisseur initiale 340 nm) est plongé dans 125 ml de méthyle éthyle cétone MEK. Ce solvant est choisi préférentiellement à l'acétone car son point d'ébullition est plus élevé (80°C contre 56°C), ce qui permet d'accélérer la réaction de greffage. On ajoute 1 mL de TMMOS (large excès par rapport à la quantité de silanols à greffer) et l'ensemble est porté au reflux. L'élimination du CTAB et le greffage du TMMOS sont suivis par spectroscopie IRTF, effectuée sur le film préalablement retiré du mélange et rincé quelques minutes dans l'acétone. L'indice et l'épaisseur sont mesurés par ellipsométrie UV-visible. La quantité de groupements méthyle greffés est évaluée à partir de l'aire de la bande Si-$CH_3$ à 2965 $cm^{-1}$, rapportée à l'épaisseur du film.

Après 18 heures de reflux, on ajoute 1 mL de TMMOS neuf. On ajoute alors environ 1 h 30 min plus tard 50 $\mu$L de triéthylamine $(CH_3CH_2)_3N$ (TEA) pour catalyser la réaction. Lorsque la réaction est terminée, l'indice du film, mesuré à 633 nm est stabilisé et atteint 1,30. La comparaison avec un film mésoporeux de silice hexagonale 3d greffé avec le HMDS (en phase vapeur, cf. exemple 1) indique que les quantités de méthyle greffées en phase liquide et vapeur sont similaires.

Exemple 4 : greffage dans le dichlorométhane $(CH_2Cl_2)$ ; élimination simultanée du CTAB.

On reproduit le mode opératoire de l'exemple 3, en utilisant le 3,3,3-trifluoropropyldiméthylchlorosilane

$CF_3$-$CH_2$-$CH_2$-$Si(CH_3)_2Cl$ à la place du HMDS et 125 ml de dichlorométhane à la place des 125 ml de MEK.

L'ajout de triéthylamine (TEA, 160 $\mu$L) après 18 heures de reflux permet de catalyser la réaction.

L'indice de réfraction final du film, mesuré à 633 nm atteint 1,338.

Exemples 5 à 8 :

Dans l'exemple 2, le brevet expose la synthèse de films mésoporeux organisés, fonctionnalisés à l'aide d'un premier agent hydrophobe, le MTEOS, qui est introduit avant l'étape de dépôt (b) du film. Dans les exemples 5 à 8, le même procédé est utilisé pour fonctionnaliser des films avec différents silanes. Le tableau ci-dessous indique les résultats obtenus.

| Exemple | Silane | Rapport molaire silane/TEOS | Humidité relative lors du dépôt | Phases obtenues | Rapports massiques CTAB/ TEOS correspondants |
|---|---|---|---|---|---|
| 5 | VTEOS | 3/7 | 58% | H3d<br>C<br>H2d | 0,210<br>0,280-0,315<br>0,350 |
| 6 | DMDEOS | 4/6 | 53% | H2d | 0,210-0,350 |

(suite)

| Exemple | Silane | Rapport molaire silane/TEOS | Humidité relative lors du dépôt | Phases obtenues | Rapports massiques CTAB/ TEOS correspondants |
|---|---|---|---|---|---|
| 7 | $C_{3f}$TMOS | 1/4 | 58% | H3d<br>C<br>H2d | 0,219<br>0,245-0,280<br>0,350 |
| 8 | | 3/7 | 46% | H2d | 0,245-0,420 |
| MTEOS : méthyltriéthoxysilane $CH_3$-Si($OCH_2CH_3$)$_3$-VTEOS : vinyltriéthoxysilane $CH_2$=CH-Si($OCH_2CH_3$)$_3$.<br>DMDEOS : diméthyldiéthoxysilane ($CH_3$)$_2$-Si($OCH_2CH_3$)$_2$.<br>$C_{3f}$TMOS : 3,3,3-trifluoropropyltriméthoxysilane $CF_3$-$CH_2$-$CH_2$-Si($OCH_3$)$_3$. | | | | | |

Exemple 9 : Dépôt d'une couche mésoporeuse en empilement anti-reflet.

On dépose la couche mésostructurée sur le système suivant :

Le substrat utilisé est une lentille plane ORMA® (de puissance -2 dioptries de diamètre 65 mm) de ESSILOR copolymère de diéthylèneglycol bisallylcarbonate (CR 39® de PPG Industries).
La surface convexe de la lentille est revêtue d'un revêtement anti-abrasion préparé et formé comme indiqué ci-après :

On fait tomber goutte à goutte 42,9 parties d'acide chlorhydrique 0,1N dans une solution contenant 135,7 parties de γ-glycidoxypropyltriméthoxysilane (GLYMO)et 49 parties de diméthyl diéthoxysilane (DMDES).

La solution hydrolysée est agitée 24 heures à température ambiante, puis on ajoute 8,8 parties d'acétylacétonate d'aluminium, 26,5 partiesd'éthylcellosolve, 400 parties de silice colloïdale à 30% dans le méthanol et 157 parties de méthanol.
On ajoute une petite quantité d'agent tensio-actif.
La composition est appliquée sur la surface de la lentille puis soumise à une précuisson de 15 minutes à 60°C. Elle est ensuite passée à l'étuve à 100°C pendant 3 heures.

- préparation de surface : on soumet la surface du revêtement anti-abrasion à une attaque alcaline dans une solution aqueuse de soude à 5% à 50°C pendant 3 min ; on rince dans l'eau adoucie, à température ambiante ; puis dans l'eau déionisée, à température ambiante ; puis séjour dans l'isopropanol à température ambiante.

- Dépôt de la couche haut indice (couche HI) : on dépose alors sur le revêtement anti-abrasion, par centrifugation, une couche d'indice de réfraction élevée (HI) (épaisseur 135-140 nm, indice 1,75, traitement thermique d'environ 10s sous rayonnement infrarouge).

La composition à haut indice (HI) de type Glymo/Colloïde de $TiO_2$ rutile est obtenue de la façon suivante :

90,45 g de glycidoxypropyltriméthoxysilane (Sivento) sont pesés dans un bécher et placés sous agitation. 20,66 g d'eau acide de concentration 0,1N sont ajoutés goutte à goutte à la solution. La température est contrôlée lors de l'hydrolyse et ne doit pas atteindre 45°C.

Lorsque la totalité de l'eau acide est additionnée, l'hydrolysat reste 15 minutes sous agitation. 640g de colloïde de $TiO_2$ colloïde Optolake®. 1120Z (11RU-7.A8) (à 20% en poids de matière sèche) de Catalyst and Chemical (CCIC) sont pesés, 160g de méthanol sont ajoutés à la solution de colloïde et placés sous agitation à température ambiante pendant 15 minutes.
800 g de la solution colloïde-méthanol sont prélevés et ajoutés au glycidoxypropyltriméthoxysilane hydrolysé.
La solution est laissée 24 heures sous agitation à température ambiante.
9,14g d'acétylacétonate d'aluminium 99% ([$CH_3COCH$=C(O-)$CH_3$]$_3$Al, Sigma Aldrich) sont pesés et ajoutés à la solution. 79,5g de méthanol sont ajoutés au mélange.
La solution reste sous agitation encore 1 h à température ambiante, puis l'extrait sec est mesuré.
La valeur est égale à 20%.

Le solvant de dilution est l'isopropanol (Carlo-Erba). La quantité de solvant à peser et ajouter à la solution doit correspondre à une dilution à 6% d'extrait sec. Cette nouvelle solution à 6% est laissée sous agitation pendant 5h et filtrée à 3$\mu$m puis stockée au congélateur à -18°C.

Lors du dépôt, 1 ml de cette solution est déposé par centrifugation (spin coating) sur les verres.

- Dépôt de la couche mésoporeuse bas indice (couche BI) :

  on forme alors sur la couche HI une couche de bas indice de réfraction de la manière suivante :

  - Préparation du sol de silice suivant la méthode décrite à l'exemple 1. Après hydrolyse et condensation, et une fois revenu à température ambiante, le sol est filtré à 0,45 $\mu$m puis refroidi dans un bain de glace.
  - On prépare par ailleurs une solution-stock à 48,7 g/L de CTAB dans l'éthanol. La solution est filtrée à 0,45 $\mu$m.
  - 3 mL du sol de silice sont prélevés et placés dans un flacon plongé dans un bain de glace. On y ajoute 67 $\mu$L d'acide chlorhydrique dilué à pH=1,25.
  - Par ailleurs, dans un autre flacon, on place 6,7 mL de la solution CTAB/éthanol, à quoi on ajoute 0,75 mL de MTEOS. Le tout est mis sous agitation.
  - On verse le contenu du flacon contenant le sol de silice acidifié dans le flacon contenant le mélange CTAB/éthanol/MTEOS sous agitation.
  - 1 minute 30 plus tard, on ajoute 8 ml d'éthanol absolu puis on attend quelques secondes.
  - 2,5 mL du mélange sont déposés sur le substrat qui est ensuite mis en rotation à 5500 tours/mn pendant 2 minutes (accélération d'environ 33 tours/$s^2$). L'enceinte dans laquelle a lieu le dépôt a été au préalable conditionnée de telle sorte que l'humidité relative vale 51%, avec un fort flux d'azote, à T = 20-25°C.
  - Après dépôt, l'échantillon sèche à l'ambiante pendant quelques heures puis on procède à la consolidation thermique à 110°C pendant 12h.
  - L'échantillon est alors laissé dans l'acétone au reflux pendant 2h, puis, sans attendre, transféré dans un réacteur muni de plusieurs compartiments. L'un de ceux-ci contient 0,5 mL de HMDS prélevé en boîte à gants. Ce compartiment est fermé au moyen d'un robinet.
  - Le compartiment principal, qui contient le verre à traiter, est placé sous vide primaire (1 à 5 mm Hg) pendant quelques minutes, après quoi on ouvre le robinet permettant de laisser passer les vapeurs de HMDS.
  - Au bout de quelques secondes, on coupe le vide dynamique et on laisse la pression de vapeur du HMDS s'établir dans l'enceinte. Le HMDS est laissé au contact du mésoporeux pendant 1h, après quoi l'enceinte est purgée plusieurs fois avec de l'azote avant ouverture du réacteur.

L'épaisseur de la couche mésoporeuse bas indice ainsi obtenue est d'environ 120 nm (130 nm juste après dépôt).

A titre de comparaison on a préparé des substrats identiques, revêtus du même revêtement anti-abrasion mais avec des revêtements anti-reflets multicouche obtenus selon une technique classique par évaporation sous vide, dans l'ordre suivant, à partir du substrat :

| | Matériau | Epaisseur optique |
|---|---|---|
| - première couche déposée | $ZrO_2$ | 55 nm |
| - deuxième couche déposée | $SiO_2$ | 30 nm |
| - troisième couche déposée | $ZrO_2$ | 160 nm |
| - quatrième couche déposée | $SiO_2$ | 120 nm |

L'anti-reflets obtenu est un anti-reflets multicouche.

On a également préparé un substrat revêtu d'une couche anti-abrasion et d'une couche HI indice 1,75, déposée par centrifugation comme décrit ci-dessus et sur lequel on dépose une couche BI mésoporeuse de la manière suivante :

Le sol inorganique est préparé selon la procédure décrite à l'exemple 1. On dissout ensuite 0,343g de CTAB dans 20mL d'éthanol absolu, puis on y ajoute 5 mL du sol une fois revenu à température ambiante. On dépose quelques gouttes du mélange sur le substrat, qui est alors mis en rotation à 4000 tours/mn pendant 2 minutes (accélération de 66 tours/$s^2$). Le dépôt a lieu dans une enceinte telle que l'humidité relative vale 60%.

L'échantillon est ensuite placé à l'étuve à 110°C pendant 12h, puis trempé dans l'éthanol au reflux pendant 5h.

La couche mésoporeuse uniquement à base de TEOS (sans agent hydrophobe) a une épaisseur d'environ

116 nm et un indice de réfraction de 1,29.

* Résultats en réflexion

On mesure le spectre de réflexion de la face traitée avec un spectrophotomètre, entre 380 et 780 nm (mesure SMR : Système de Mesure de Réflexion).

Les résultats sont reportés dans les tableaux ci-dessous :

| | h (°) | C* | Rmoy (%) | Rvis (%) |
|---|---|---|---|---|
| AR multicouche (Comparatif) | 127,0 | 6,5 | 0,70 | 0,63 |
| Bicouche t = 0 (Comparatif) sans agent hydrophobe | 157,5 | 6,1 | 0,40 | 0,46 |
| Bicouche après 60h dans le silicagel (Comparatif) sans agent hydrophobe | 152,0 | 13,7 | 0,72 | 1,03 |
| Bicouche après 60h à l'air ambiant (Comparatif) sans agent hydrophobe | 140,6 | 16,1 | 1,49 | 2,17 |

Les caractéristiques colorimétriques et de réflexion des différents systèmes étudiés. h (teinte) en degrés, C* (saturation de la couleur), Rmoy (réflexion résiduelle, moyennée sur le spectre visible), et Rvis (réflexion pondérée par la courbe de sensibilité de l'oeil). Les couples (h, C*) et (Rmoy, Rvis) sont interdépendants ; on s'intéressera surtout aux coefficients de réflexion (Rmoy et Rvis).

On observe que les performances du bicouche à base de TEOS et ne contenant pas d'agent hydrophobe se détériorent rapidement.

**Résultats en réflexion**

Le coefficient de réflexion de la face traitée avec la couche mésoporeuse selon l'invention est mesuré par SMR quelques heures après extraction puis quelques jours plus tard. Les verres sont conservés à l'ambiante. Les résultats sont reportés dans le tableau ci-dessous.

| | h(°) | C* | Rmoy (%) | Rvis (%) |
|---|---|---|---|---|
| Bicouche à t=0 MTEOS/TEOS Traité HMDS | 188 $\pm$ 4 | 3,4 $\pm$ 0,9 | 0,32 $\pm$ 0,02 | 0,24 $\pm$ 0,01 |
| Bicouche t=7j MTEOS/TEOS Traité HMDS | 189 $\pm$ 3 | 3,4 $\pm$ 0,8 | 0,32 $\pm$ 0,01 | 0,24 $\pm$ 0,02 |
| Bicouche t=14j MTEOS/TEOS Traité HMDS | 190 $\pm$2 | 4,0 $\pm$ 0,6 | 0,33 $\pm$ 0,01 | 0,26 $\pm$ 0,02 |
| Bicouche t=22j MTEOS/TEOS Traité HMDS | 187 $\pm$ 2 | 4,8 $\pm$ 0,5 | 0,34 $\pm$ 0,01 | 0,29 $\pm$ 0,02 |
| AR multicouche (Comparatif) | 127,0 | 6,5 | 0,70 | 0,63 |

On constate que le bicouche réalisé à partir du matériau bas indice mésoporeux selon l'invention s'avère extrêmement efficace. De plus, il est assez stable dans le temps (sur une échelle de temps d'au moins deux semaines). Cette stabilité est sans commune mesure avec celle d'un bicouche réalisé avec un film de TEOS non traité.

* Résistance aux tests d'usure

• Nature des tests effectués

**N10cps**

Test d'adhérence des couches antireflet entre elles ou de l'antireflet sur le vernis. Evaluation de la résistance à l'arrachement du traitement antireflet par frottement d'une gomme recouverte d'un tissu Selvyt imbibé d'isopropanol (N x séries de 10 sollicitations). Résultat : Note / 12 du mauvais au bon (3/12 ; 6/12 ; 9/12 ; 12/12 ; >12/12) pour chacune des faces testées. Le test est décrit en détail dans la demande de brevet WO 99/49097.

• Résultats aux tests

| | N10 coups |
|---|---|
| Bicouche avec BI mésoporeux (MTEOS/TEOS extrait acétone et greffé HMDS) | > 12R# |
| # Le test va jusqu'à 12, mais les verres ont été testés au-delà sans détérioration supplémentaire. 12R signifie « raies » ou fines rayures, classique pour ce type d'empilement. | |

* Angle de contact

Les mesures sont effectuées sur un goniomètre Digidrop de la société GBX. 4 μL d'eau sont déposés automatiquement sur la surface de l'échantillon à étudier, puis l'angle de contact est mesuré. On compare les films suivants :
- un film mésoporeux à base de TEOS extrait à l'acétone et greffé par du HMDS ;
- un film mésoporeux MTEOS/TEOS extrait à l'acétone ;
- un film mésoporeux MTEOS/TEOS extrait à l'acétone et greffé par le HMDS.

| Nature du film | Angle de contact avec l'eau |
|---|---|
| TEOS mésoporeux extrait à l'acétone puis greffé HMDS | 65,5° |
| MTEOS/TEOS mésoporeux extrait à l'acétone | 64,6° |
| MTEOS/TEOS mésoporeux extrait à l'acétone puis greffé HMDS | 75,3° |

## Revendications

**1.** Procédé de fabrication d'un substrat revêtu d'une couche mésoporeuse dont l'indice de réfraction est stable dans le temps, comprenant :

a) la préparation d'un sol précurseur d'une couche mésoporeuse comprenant un agent précurseur choisi parmi les composés de formule :

$$M(X)_4 \qquad (I)$$

dans laquelle, X est un groupe hydrolysable préférentiellement choisi parmi les groupes alcoxy, esters et halogènes, de préférence alcoxy, et M représente le silicium ou un métal tétravalent; de préférence le silicium, et leurs mélanges ; au moins un solvant organique ; au moins un agent porogène ; et de l'eau ; et éventuellement un catalyseur d'hydrolyse des produits X ;
b) le dépôt d'un film du sol précurseur sur une surface principale du substrat et la formation d'un film à structure mésoporeuse ;
c) optionnellement la consolidation de la structure mésoporeuse du film déposé ;
d) l'élimination de l'agent porogène ; et e) la récupération du substrat revêtu de la couche mésoporeuse ;
le procédé étant **caractérisé en ce que** :

(i) l'élimination de l'agent porogène s'effectue à une température ≤ 150°C, de préférence ≤ 130°C, mieux ≤ 120°C et mieux encore ≤ 110°C ; et
(ii) le procédé comprend une étape d'introduction d'au moins un agent réactif porteur d'au moins un groupe hydrophobe avant l'étape de dépôt (b) du film du sol précurseur et/ou après l'étape b).

**2.** Procédé selon la revendication 1, **caractérisé en ce qu'**il ne comporte aucune étape s'effectuant à une température supérieure à 150°C.

**3.** Procédé selon la revendication 1 ou 2, **caractérisé en ce que** l'étape de consolidation de la structure mésoporeuse c) du film déposé comprend un chauffage à une température ≤ 150°C, de préférence ≤ 130°C, mieux ≤ 120°C et mieux encore ≤ 110°C.

**4.** Procédé selon l'une quelconque des revendication 1 à 3, **caractérisé en ce que** les groupes hydrolysables de l'agent précurseur de formule (I) sont choisis parmi les groupes alcoxy en $C_1$-$C_4$, de préférence méthoxy ou éthoxy ;

les groupes esters

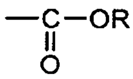

où R est un radical alkyle en $C_1$-$C_6$, de préférence méthyle ou éthyle ; Cl, Br, I est les combinaisons de ces groupes.

**5.** Procédé selon l'une quelconque des revendications 1 à 4, **caractérisé en ce que** les métaux tétravalents sont choisis parmi Ti, Zr, Sn, préférentiellement Si.

**6.** Procédé selon l'une quelconque des revendications 1 à 4, **caractérisé en ce que** l'agent précurseur est le tétraéthoxysilane (TEOS).

**7.** Procédé selon l'une quelconque des revendications précédentes, **caractérisé en ce que** le solvant est choisi parmi les solvants polaires, de préférence les alcanols.

**8.** Procédé selon l'une quelconque des revendications précédentes, **caractérisé en ce que** l'agent porogène est choisi parmi les agents tensio-actifs non-ioniques, cationiques, anioniques et amphotères.

**9.** Procédé selon la revendication 8, **caractérisé en ce que** l'agent porogène est choisi parmi le bromure de cétyltriméthylammonium (CTAB), le chlorure de cétyltriméthylammonium, les copolymères diblocs d'oxyde d'éthylène et d'oxyde de propylène, les copolymères triblocs d'oxyde d'éthylène et d'oxyde de propylene, les poly(oxyalkylènes) alkyléthers, notamment les poly(oxyéthylène)alkyléthers comme, par exemple, le polyoxyéthylène(10)stéaryléther, et les diols acétyléniques éthoxylés et leurs mélanges.

**10.** Procédé selon l'une quelconque des revendications précédentes, **caractérisé en ce que** l'agent porogène est le bromure de cétyltriméthylammonium.

**11.** Procédé selon l'une quelconque des revendications précédentes, **caractérisé en ce que** le rapport massique de l'agent porogène à l'agent précurseur et, éventuellement à l'agent réactif introduit dans le sol précurseur, varie de 0,01 à 5, de préférence de 0,05 à 1.

**12.** Procédé selon l'une quelconque des revendications précédentes, **caractérisé en ce que** l'étape d'élimination de l'agent porogène s'effectue par extraction au moyen d'un solvant organique ou mélange de solvants organiques, d'un fluide à l'état supercritique, dégradation au moyen d'un rayonnement UV et/ou d'ozone, traitement par plasma ou décharge corona.

**13.** Procédé selon la revendication 12, **caractérisé en ce que** l'élimination de l'agent porogène s'effectue au moyen d'un solvant organique ou mélange de solvants organiques, préférentiellement au reflux.

**14.** Procédé selon la revendication 13, **caractérisé en ce que** le solvant est choisi parmi les alcanols, en particulier l'éthanol, les alkylcétones, en particulier l'acétone, les chlorures d'alkyle, en particulier le dichlorométhane .

**15.** Procédé selon l'une quelconque des revendications précédentes, **caractérisé en ce que** au moins un agent réactif porteur de groupements hydrophobes est introduit au cours de l'étape d).

**16.** Procédé selon l'une quelconque des revendications précédentes, **caractérisé en ce que** l'étape d'introduction (ii) d'un agent réactif porteur d'au moins un groupe hydrophobe comprend l'ajout au sol précurseur, avant l'étape de dépôt (b) du film de sol précurseur, d'au moins un premier réactif porteur d'au moins un groupe hydrophobe et l'introduction dans la couche mésoporeuse, après l'étape b) ou c) d'au moins un second réactif différent du premier réactif, porteur d'au moins un groupe hydrophobe.

**17.** Procédé selon la revendication 16, **caractérisé en ce que** le premier réactif porteur d'au moins un groupe hydrophobe est choisi parmi les composés et les mélanges des composés de formules :

$$(R^1)_{n1}\ (R^2)_{n2}\ Si \quad \text{ou} \quad (R^3)_{n3}\ (R^4)_{n4}\ Si{-}R'{-}Si\ (R^5)_{n5}\ (R^6)_{n6}$$

(II) (III)

dans lesquelles :

- $R^1$, $R^3$ et $R^5$ représentent un groupe hydrocarboné saturé ou non, de préférence en $C_1$-$C_4$, par exemple un groupe alkyle tel que méthyle ou éthyle, un groupe vinyle, un groupe aryle, par exemple phényle, éventuellement substitué, notamment par un ou plusieurs groupes alkyles en $C_1$-$C_4$, et les groupes analogues fluorés ou perfluorés ;
- $R^2$, $R^4$ et $R^6$ représentent un groupe hydrolysable choisis parmi les groupes alcoxy, en particulier alcoxy en $C_1$-$C_4$, esters

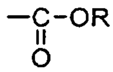

où R est un radical alkyle en $C_1$-$C_6$, de préférence méthyle ou éthyle, et les halogènes tels que Cl, Br et I ;
- R' représente un groupe alkylène ou arylène ;
- $n_1$ est un entier de 1 à 3 ;
- $n_2$ est un entier de 1 à 3 ; et $n_1 + n_2 = 4$ ;
- $n_3$, $n_4$, $n_5$, et $n_6$ sont des entiers de 0 à 3 à la condition que les sommes $n_3 + n_5$ et $n_4 + n_6$ soient différentes de zéro ; et
- $n_3+n_4=n_5+n_6=3$.

**18.** Procédé selon la revendication 17, **caractérisé en ce que** le premier réactif est le méthyltriéthoxysilane (MTEOS).

**19.** Procédé selon l'une quelconque des revendications 16 à 18, **caractérisé en ce que** le rapport molaire du premier réactif à l'agent précurseur varie de 10/90 à 50/50 et est de préférence de 20/30.

**20.** Procédé selon l'uné quelconque des revendications précédentes, **caractérisé en ce que** l'agent précurseur est hydrolysé et condensé avant l'introduction d'au moins un agent réactif porteur d'au moins un groupe hydrophobe.

**21.** Procédé selon l'une quelconque des revendications 16 à 20, **caractérisé en ce que** l'étape (b) de dépôt du film de sol précurseur s'effectue 5 minutes ou moins après l'ajout du premier réactif dans le sol précurseur.

**22.** Procédé selon l'une quelconque des revendications 16 à 21, **caractérisé en ce que** le second réactif porteur d'au moins un groupe hydrophobe est un composé du silicium comportant une seule fonction capable de réagir avec des groupes hydroxyles de la couche mésoporeuse, et préférentiellement comportant au moins un groupe trialkylsilyle, de préférence triméthylsilyle.

**23.** Procédé selon la revendication 22, **caractérisé en ce que** le second réactif est un chlorosilane, un alkoxysilane, préférentiellement le triméthylméthoxysilane, un fluorosilane, préférentiellement le 3,3,3-trifluoropropyldiméthylchlorositane, un disilazane et de préférence l'hexaméthyldisilazane (HMDS).

**24.** Procédé selon l'une quelconque des revendications 1 à 15, **caractérisé en ce que** l'étape d'introduction (ii) d'au moins un réactif porteur d'au moins un groupe hydrophobe comprend uniquement l'introduction dans la couche mésoporeuse, après ou au cours de l'étape d'élimination (d) de l'agent porogène, d'au moins un réactif porteur d'au moins un groupe hydrophobe.

**25.** Procédé selon la revendication 24, **caractérisé en ce que** le réactif est choisi parmi les composés de silicium comportant une seule fonction capable de réagir avec des groupes hydroxyles de la couche mésoporeuse et préférentiellement comportant au moins un groupe trialkylsilyle, de préférence triméthylsilyle.

**26.** Procédé selon la revendication 24, **caractérisé en ce que** le réactif est un disilazane et de préférence l'héxaméthyldisilazane (HMDS).

**27.** Procédé selon l'une quelconque des revendications précédentes, **caractérisé en ce que** l'élimination de l'agent porogène s'effectue à une température ≤ 130°C.

**28.** Procédé selon l'une quelconque des revendications 1 à 23 **caractérisé en ce que** le procédé comprend :

(ii) une étape d'introduction d'au moins un agent réactif porteur d'au moins un groupe hydrophobe avant l'étape de dépôt b) du film du sol précurseur et/ou pendant l'étape d).

**29.** Procédé selon l'une quelconque des revendications 1 à 23, **caractérisé en ce que** le procédé comprend :

(ii) soit une étape d'introduction d'au moins un premier agent réactif porteur d'au moins un groupe hydrophobe avant l'étape de dépôt b) du film du sol précurseur et l'introduction d'au moins un second agent réactif porteur d'au moins un groupe hydrophobe, différent du premier agent réactif, après l'étape b) ou, si elle a lieu, après l'étape c),
soit une étape d'introduction d'au moins un second agent réactif porteur d'au moins un groupe hydrophobe, après ou au cours de l'étape d).

**30.** Procédé selon l'une quelconque des revendications 1 à 23, **caractérisé en ce que** le procédé comprend :

(ii) une étape d'introduction d'au moins un agent réactif porteur d'au moins un groupe hydrophobe pendant l'étape d).

**31.** Procédé selon l'une quelconque des revendications 1 à 30, **caractérisé en ce que** les revêtements sont choisis parmi les primaires anti-chocs, les revêtements anti-abrasion et les revêtements anti-reflets.

**32.** Procédé selon l'une quelconque des revendications 1 à 30, **caractérisé en ce que** la couche mésoporeuse est formée sur une couche de haut indice de réfraction (n > 1,50), préalablement déposée sur la surface du substrat, la couche mésoporeuse ayant un bas indice de réfraction (n ≤ 1,50), de sorte que la combinaison de la couche haut indice de réfraction et la couche mésoporeuse forme un revêtement anti-reflets bi-couche, ou multicouche.

**33.** Procédé selon l'une quelconque des revendications précédentes, **caractérisé en ce que** la couche mésoporeuse est revêtue d'un film hydrophobe et/ou oléophobe.

**34.** Procédé selon l'une quelconque des revendications précédentes, **caractérisé en ce que** le substrat est une lentille ophtalmique.

**35.** Lentille ophtalmique comprenant un substrat transparent ayant une surface principale revêtue d'une couche mésoporeuse dont l'indice de réfraction est stable dans le temps, susceptible d'être obtenue par le procédé selon l'une quelconque des revendications 1 à 30.

**36.** Lentille ophtalmique selon la revendication 35, **caractérisée en ce que** la couche mésoporeuse a un indice de réfraction n ≤ 1,50, de préférence ≤ 1,35.

**37.** Lentille ophtalmique selon la revendication 35 ou 36, **caractérisée en ce que** la couche mésoporeuse constitue la couche de bas indice de réfraction d'un revêtement anti-reflets bi-couche ou multicouche, ou d'un miroir de Bragg.

**38.** Lentille ophtalmique selon l'une quelconque des revendications 35 à 37, **caractérisée en ce que** la couche mésoporeuse est déposée sur un revêtement anti-abrasion.

**39.** Lentille ophtalmique selon l'une quelconque des revendications 35 à 38, **caractérisée en ce que** la couche mésoporeuse a un bas indice de réfraction (n ≤ 1,50) et **en ce qu'**elle est déposée sur une couche de haut indice de réfraction (n > 1,50) formée sur la surface principale du substrat et forme, avec la couche de haut indice, un revêtement anti-reflets bi-couche, ou multicouche.

**40.** Lentille ophtalmique selon la revendication 39, **caractérisée en ce que** la couche de haut indice de réfraction est elle-même formée sur un revêtement anti-abrasion formée sur la surface principale du substrat.

**41.** Lentille ophtalmique selon l'une quelconque des revendications 35 à 40, **caractérisée en ce que** la couche mésoporeuse est elle-même revêtue d'une couche hydrophobe et/ou oléophobe.

**42.** Lentille ophtalmique selon l'une quelconque des revendications 35 à 41, **caractérisée en ce que** le substrat est un matériau organique.

## Claims

**1.** A method for producing a substrate coated with a mesoporous layer having a refractive index that is table over time, comprising;

a) the preparation of a precursor sol of a mesoporous layer containing a precursor agent selected from compounds with the formula:

$$M(X)_4 \qquad (I)$$

wherein, X is a hydrolysable group preferably selected from the alkoxy, esters and halogens groups, preferably alkoxy, and M represents silicon or a tetravalent metal, preferably silicon, and mixtures of these; at least one organic solvent; at least one pore forming agent; and water, and optionally a catalyst for the hydrolysis of the X products;
b) depositing a film of the precursor sol on a main surface of the substrate and the formation of the mesoporous structure;
c) optionally the consolidation of the mesoporous structure of the deposited film;
d) the elimination of the pore forming agent; and
e) obtaining the substrate coated with the mesoporous layer;
the method being **characterised in that**:

(i) the elimination of the pore forming agent is carried out at a temperature ≤ 150°C, preferably ≤ 130°C, more preferably ≤ 120 °C and still more preferably ≤ 110°C; and
(ii) the method includes a step of introducing at least one reactive agent bearing at least one hydrophobic group before the deposition step (b) of the film of precursor sol and/or after the step (b).

**2.** A method according to claim 1, **characterised in that** it includes no step carried out at a temperature of over 150°C.

**3.** A method according to claims 1 or 2, **characterised in that** the step of consolidating the mesoporous structure c) of the deposited film includes heating to a temperature ≤ 150°C, preferably ≤ 13°C, more preferably ≤ 120°C and still more preferably ≤ 110°C.

**4.** A method according to any one of the claims 1 to 3, **characterised in that** the hydrolysable groups of the precursor agent of formula (I) are selected from alkoxy groups in preferable methoxy or ethoxy; the ester groups

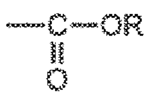

in which R is an alkyl radical in C1-C6, preferably methyl or ethyl; Cl, Br, I and combinations of these groups.

**5.** A production method according to any one of the claims 1 to 4, **characterised in that** the tetravalent metals are selected from among Ti, Zr, Sn, preferably Si.

**6.** A production method according to any one of the claims 1 to 4, **characterised in that** the precursor agent is tetraethoxysilane (TEOS).

**7.** A method according to any one of the preceding claims, **characterised in that** the solvent is selected from polar solvents, preferably alkanols.

**8.** A method according to any one of the preceding claims, **characterised in that** the pore forming agent is selected from non-ionic, cationic, anionic and amphoteric surfactant.

**9.** A method according to claim 8, **characterised in that** the pore forming agent is selected from cetyltrimethylammonium bromide (CTAB), cetyltrimethylammonium chloride, diblock copolymers of ethylene oxide and propylene oxide, triblock copolymers of ethylene oxide and propylene oxide, polyoxyalkylene alkylethers, particularly polyoxyalkylene alkylethers such as, for example, polyoxyethylene (10) stearyl ether, and ethoxylated acetylenic diols and mixtures of these.

**10.** A production method according to any one of the preceding claims, **characterised in that** the pore forming agent is cetyltrimethylammonium bromide.

**11.** A production method according to any one of the preceding claims, **characterised in that** the weight, ratio of the pore forming agent to the precursor agent and, optionally the reactive agent added to the precursor sol, varies from 0.01 to 5, preferably from 0.05 to 1.

**12.** A method according to any one of the preceding claims, **characterised in that** the step of eliminating the pore forming agent is carried out by extraction using an organic solvent or a mixture of organic solvents, a fluid in the supercritical state, by degradation using UV and/or ozone radiation, treating by plasma or corona discharge.

**13.** A method according to claim 12, **characterised in that** the elimination of the pore forming agent is carried out using an organic solvent, or a mixture of organic solvents, preferably at reflux.

**14.** A method according to claim 13, **characterised in that** the solvent is selected from among alkanols, particularly ethanol, alkylketones, particularly acetone, alkyl chlorides, particularly dichloromethane.

**15.** A production method according to any one of the preceding claims, **characterised in that** at least one reagent bearing hydrophobic groups is added during step d).

**16.** A production method according to any one of the preceding claims, **characterised in that** the step of introducing (ii) a reactive agent bearing at least one hydrophobic group comprises adding to the precursor sol, before the deposition step (b) of the film of the precursor sol, at least one first reagent bearing at least one hydrophobic group and introducing into the mesoporous layer after step (b) or (c) at least one second reagent different from the first reagent, bearing at least one hydrophobic group.

**17.** A method according to claim 16, **characterised in that** the first reagent bearing at least one hydrophobic group is selected from among compounds and mixtures of compounds with the formula:

$(R^1)_{n1} (R^2)_{n2} Si$ or $(R^3)_{n3} (R^4)_{n4} Si—R'—Si (R^5)_{n5} (R^6)_{n6}$

(II) (III)

wherein:

- $R^1$, $R^3$ and $R^5$ represent a saturated or unsaturated hydrocarbon group, preferably in $C_1$-$C_4$, for example an alkyl group, such as methyl or ethyl, a vinyl group, an aryl group, for example phenyl, optionally substituted, particularly by one or several alkyl groups in $C_1$-$C_4$, and the fluorinated or perfluorinated analogues;
- $R^2$, $R^4$ and $R^6$ are a hydrolysable group, preferably selected from among the alkoxy groups, particularly alkoxy in $C_1$-$C_4$, esters

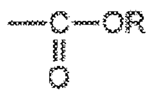

in which R is an alkyl radical in $C_1$-$C_6$, preferably methyl or ethyl, and halogens such as C1, Br and I ;

- R' air alkylene or arylene group;
- $n_1$ is an integer from 1 to 3;
- $n_2$ is an integer from 1 to 3; and $n_1 - n_2 = 4$;
- $n_3$, $n_4$, $n_5$, and $n_6$ are integers from 0 to 3 with the condition that the sums $n_3 + n_5$ and $n_4 + n_6$ are not equal to zero; and
- $n_3 + n_4 = n_5 + n_6 = 3$.

**18.** A method according to claim 17, **characterised in that** the first reagents is methyltriethoxysilane (MTEOS).

**19.** A method according to one of the claims 16 to 18, **characterised in that** the molar ratio of the first reagent to the precursor agent varies from 10/90 to 50/50 and is preferably 20/30.

**20.** A method according to any one of the preceding claims, **characterised in that** the precursor agent is hydrolysed and condensed before introducing at least one reagent bearing at least one hydrophobic group.

**21.** A method according to any one of the claims 16 to 20, **characterised in that** the step (b) of depositing the film of the precursor sol is carried out 5 minutes or less after adding the first reagent to the precursor sol.

**22.** A method according to any one of the claims 16 to 21, **characterised in that** the second reagent bearing at least one hydrophobic group is a silicon compound with a single function capable of reacting with the hydroxyl groups of the mesoporous layer, and preferably containing at least one trialkylsilyl group, preferably trimethylsilyl.

**23.** A method according to claim 22, **characterised in that** the second reagent is a chlorosilane, an alkoxysilane, preferably trimethylmethoxysilane, a fluorosilane, preferably 3,3,3-trifluoropropyldimethylchlorosilane, a disilazane and preferably hexamethyldisilazane (HMDS).

**24.** A method according to any one of the claims 1 to 15, **characterised in that** the step of introducing (ii) at least one reactive agent bearing at least one hydrophobic group only comprises introducing into the mesoporous layer after or during the elimination step (d) of the pore forming agent, at least one reagent bearing at least one hydrophobic group.

**25.** A method according to claim 24, **characterised in that** the reagent is selected from silicon compounds with a single function capable of reacting with the hydroxyl groups of the mesoporous layer, and preferably containing at least one trialkylsilyl group, preferably trimethylsilyl.

**26.** A method according to claim 24, **characterised in that** the reagent is a disilazane and preferably hexamethyldisilazane (HMDS).

**27.** A production method according to any one of the preceding claims, **characterised in that** the elimination of the port forming agent is carried out at a temperature ≤ 130°C.

**28.** A production method according to any one of claims 1 to 23, **characterised in that** the process comprises:

(ii) a step of introducing at least one reactive agent bearing at least one hydrophobic group before the deposition step (b) of the film of precursor sol and/or during step (d).

**29.** a production method according to any one of claims 1 to 23, **characterised in that** the process comprises:

(ii) either a step of introducing at least one first reagent bearing at least one hydrophobic group before the deposition step (b) of the film of precursor sol and introducing at least one second reagent bearing at least one hydrophobic group after step (b), or, if any, after step (c), said second reagent being different from the first one or a step of introducing at least one second reagent bearing at least one hydrophobic group, after or during step (d).

**30.** A production method according to any one of claims 1 to 23, **characterized in that** the process comprises:

(ii) a step of introducing at least one reagent bearing at least one hydrophobic group during step (d).

**31.** A method according to any one of claims 1 to 30, **characterised in that** the coatings are selected from anti-shock primer coatings, anti-abrasion coatings and anti-reflective coatings.

**32.** A method according to any one of claims 1 to 30, **characterised in that** the mesoporous layer is formed on a high refractive index layer ($n > 1.50$), previously deposited on the substrate, the mesoporous layer having a low refractive index ($n \leq 1.50$), so that the combination of the high refractive index layer and the mesoporous layer forms a bilayer or multilayer anti-reflective coating.

**33.** A method according to any of the preceding claims, **characterised in that** the mesoporous layer is coated with a hydrophobic and/or oleophobic film.

**34.** A method according to any one of the preceding claims, **characterised in that** the substrate is an ophthalmic lens.

**35.** An ophthalmic lens comprising a transparent substrate having a main surface coated with a mesoporous layer that is obtainable by the method according to any one of the claims 1 to 30, said mesoporous layer having a refractive index that is stable over time.

**36.** An ophthalmic lens according to claim 35, **characterised in that** the mesoporous layer has a refractive index $n \leq 1.50$, preferably $\leq 1.35$.

**37.** An ophthalmic lens according to claim 35 or 36, **characterised in that** the mesoporous layer is the low refractive index layer of a bilayer or multilayer antireflection coating, or of a Bragg mirror.

**38.** An ophthalmic lens according to any one of claims 35 to 37, **characterised in that** the mesoporous layer is deposited on an anti-abrasion coating.

**39.** An ophthalmic lens according to claim 35 to 38, **characterised in that** the mesoporous layer has a low refractive index ($n \leq 1.50$) and **in that** it is deposited on a high refractive index layer ($n > 1.50$) formed on the in surface, of the substrate and forms, with the high refractive index layer, a bilayer or multilayer anti-reflective coating.

**40.** An ophthalmic lens according to claim 39, **characterised in that** the high refractive index layer is itself formed on an anti-abrasion coating formed on the main surface of the substrate.

**41.** An ophthalmic lens according to any one of the claims 35 to 40, **characterised in that** the mesoporous layer is itself coated with a hydrophobic and/or oleophobic layer.

**42.** An ophthalmic lens according to any one or the claims 35 to 41, **characterised in that** the substrate is an organic material.

**Patentansprüche**

**1.** Verfahren zur Herstellung eines Substrates, versehen mit einer mesoporösen Schicht, dessen Brechungsindex über die Zeit stabil ist, umfassend:

a) Vorbereiten eines Vorläufersols einer mesoporösen Schicht, umfassend ein Vorläuferagens, ausgewählt unter Verbindung der Gleichung:

$$M(X)_4 \qquad (I)$$

wobei X eine hydrolysierbare Gruppe ist, vorteilhafter Weise gewählt unter den Gruppen von Alkoxy, Estern und Halogenen, bevorzugt von Alkoxy, und wobei M Silizium oder ein tetravalentes Metall darstellt, bevorzugt Silizium, wie auch deren Mischung; zumindest ein organisches Lösungsmittel; zumindest ein porogenes Agens; und Wasser; und ggf. einen Hydrolysekatalysator bezüglich der Produkte X;
b) Abscheiden eines Filmes des Vorläufersols an einer Hauptsache des Substrates und Ausbilden eines Filmes mit mesoporöser Struktur;

c) optionales Konsolidieren der mesoporösen Struktur des abgeschiedenen Filmes;
d) Eliminieren des porogenen Agens; und
e) Wiedergewinnen des mit der mesoporösen Schicht versehenen Substrates;
wobei das Verfahren **dadurch gekennzeichnet ist, dass:**

(i) das Eliminieren des porogenen Agens bei einer Temperatur erfolgt von ≤ 150°C, bevorzugt von ≤ 130°C, insbesondere bevorzugt von ≤ 120°C und noch bevorzugter von ≤ 110°C; und
(ii) das Verfahren einen Schritt enthält des Einbringens zumindest eines reaktiven Agens, Träger von zumindest einer hydrophoben Gruppe, vor dem Schritten des Abscheidens (b) des Vorläufersolfilmes und/oder nach dem Schritt b),

2. Verfahren nach Anspruch 1, **dadurch gekennzeichnet, dass** es keinen Schritt enthält, durchgeführt bei einer Temperatur oberhalb von 150°C.

3. Verfahren nach Anspruch 1 oder 2, **dadurch gekennzeichnet, dass** der Schritt des Konsolidierens der mesoporösen Struktur c) des abgeschiedenen Filmes eine Erwärmung enthält auf eine Temperatur von ≤ 150°C, bevorzugt von ≤ 130°C, insbesondere bevorzugt von ≤ 120°C und noch bevorzugter von ≤ 110°C .

4. Verfahren nach einem der Ansprüche 1 bis 3, **dadurch gekennzeichnet, dass** die hydrolysierbarenhydrolisierbaren Gruppen des Vorläuferagens nach der Gleichung (I) ausgewählt sind aus der Gruppe den $C_1$-$C_4$ Alkoxygruppen, vorzugsweise Methoxy oder Ethoxy; den Estergruppen

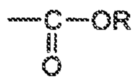

wobei R ein $C_1$-$C_6$ Alkylradikal ist, vorzugsweise Methyl oder Ethyl; Cl, Br, I und die Kombinationen dieser Gruppen.

5. Verfahren nach einem der Ansprüche 1 bis 4, **dadurch gekennzeichnet, dass** die tetravalenten Metalle ausgewählt sind aus Ti, Zr, Sn, bevorzugt Si.

6. Verfahren nach einem der Ansprüche 1 bis 4, **dadurch gekennzeichnet, dass** das Vorläuferagens Tetraethoxysilan (TEOS) ist.

7. Verfahren nach einem der vorangegangenen Ansprüche, **dadurch gekennzeichnet, dass** das Lösungsmittel aus polaren Lösungsmitteln ausgewählt ist, bevorzugt den Alkanolen,

8. Verfahren nach einem der vorangegangenen Ansprüche, **dadurch gekennzeichnet dass** das porogene Agens ausgewählt ist aus den tensioaktiven, nichtionischen, kationischen, anionischen und amphoteren Tensiden.

9. Verfahren nach Anspruch 8, **dadurch gekennzeichnet, dass** das porogene Agens ausgewählt ist aus Cetyltrimethylammoniumbromid (CTAB), Cethyhrimethylammoniumchlorid, zweiblöckigen Copolymeren von Ethylenoxid- und Propylenoxiddreiblöckigen Copolymeren von Ethylenoxid und Propylenoxid, Poly(Oxyalkylen)alkylethemoxyalkylen)alkylether, insbesondere Poly(Oxyethylen)alkylethernoxyethylen)alkylether, wie zum Beispiel dem Polvoxyethylen(10)stearylether, sowie dendem ethoxylierten acetylenischen Dielen und deren Mischungen.

10. Verfahren nach einem der vorangegangenen Ansprüche, **dadurch gekennzeichnet, dass** das porogene Agens Cetyltrimethylammoniumbromid ist.

11. Verfahren nach einem der vorangegangen Anspruche, **dadurch gekennzeichnet, dass** das Massenverhältnis des porogenen Agens zu dem des Vorläuferagens und gegebenenfalls zu dem in das Vorläufersol eingeführte des reaktive Agens, zwischen 0,01 bis 5, bevorzugt von 0,05 bis 1 variiert.

12. Verfahren nach einem der vorangegangenen Ansprüche, **dadurch gekennzeichnet, dass** der Schritt des Eliminierens des porogenen Agens ausgeführt wird vermittels der Extraktion eines organischen Lösungsmittels oder einer Mischung von organischen Lösungsmitteln, eines Fluides im überkritischen Zustand, Degradation vermittels

einer UV-Strahlung und/oder von Ozon, Behandlung durch Plasma oder Koronaentladung.

**13.** Verfahren nach Anspruch 12, **dadurch gekennzeichnet, dass** das Eliminieren des porogenen Agens erfolgt vermittels eines organischen Lösungsmittels oder einer Mischung organischer Lösungsmittel, bevorzugt mittels Reflux.

**14.** Verfahren nach Anspruch 13, **dadurch gekennzeichnet, dass** das Lösungsmittel ausgewählt ist unter den Alkanolen, insbesondere dem Ethanol, den Alkylketonen, und insbesondere Aceton, Alkylchlorid und insbesondere Dichlormethan.

**15.** Verfahren nach einem der vorangegangenen Ansprüche, **dadurch gekennzeichnet, dass** zumindest ein reaktive Agens, Träger von hydrophoben Gruppen, während Schritt, d) eingebracht ist.

**16.** Verfahren nach einem der vorangegangenen Ansprüche, **dadurch gekennzeichnet, dass** der Schritt des Einbringens (ii) eines reaktiven Agens, Träger zumindest einer hydrophoben Gruppe, das Zuführen zum Vorläufer umfasst, vor dem Schritt des Abscheidens (b) des Filmes des Vorläufersols, von zumindest einem ersten reaktiven Trägers zumindest einer hydrophoben Gruppe und der Einbringung in die mesoporöse Schicht nach dem Schiritt b) oder c) von zumindest einem zweiten Reagenz, unterschiedlich von dem ersten Reagenz, Träger von zumindest einer hydrophoben Gruppe.

**17.** Verfahren nach Anspruch 16, **dadurch gekennzeichnet, dass** das erste Reagenz, Träger von zumindest einer hydrophoben Gruppe, ausgewählt ist und unter den Verbindungen und den Mischungen der Verbindungen mit den Gleichungen:

$$(R^1)_{n1}\,(R^2)_{n2}\,Si \quad \text{oder} \quad (R^3)_{n3}\,(R^4)_{n4}\,Si\text{-}R1\text{-}Si\,(R^5)_{n5}\,(R^6)_{n6}$$

(II) (III)

in welchen,

- $R^1$ $R^3$ und $R^5$ gesättigte oder ungesättigte Kohlenwasserstoffgruppen wiedergeben, bevorzugt, in $C_1$-$C_4$, zum Beispiel eine Alkylgruppe, wie Methyl oder Ethyl, eine Vinylgruppe, eine Arylgruppe, zum Beispiel Phenyl, ggf. substituiert, insbesondere durch eine oder mehrere Alkylgruppen in $C_1$-$C_4$ und den analogen fluorierten oder perfluorierten Gruppen;
- $R^2$, $R^4$ und $R^6$ eine hydrolysierbare Gruppe wiedergeben, ausgewählt unter den Alkoxygruppen, insbesondere Alkoxy in $C_1$-$C_4$ Estern,

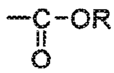

wobei R ein Alkylradikal in $C_1$-$C_6$ bzw, ein $C_1$-$C_6$ Alkylradikal ist, bevorzugt Methyl oder Ethyl und die Halogene wie Cl, Br und I;
- R' eine Alkylen- oder Arylgruppe wiedergibt;
- $n_1$ eine Ganzzahl zwischen 1 und 3 ist;
- $n_2$ eine Ganzzahl zwischen 1 und 3 ist, und $n_1 + n_2 = 4$ gilt;
- $n_3$, $n_4$, $n_5$ und $n_6$ Ganzzahlen sind zwischen 0 und 3 mit der Vorgabe, dass die Summen $n_3 + n_5$ und $n_4 + n_6$ ungleich 0 seien und
- $n_3 + n_4 = n_5 + n_6 = 3$ gilt

**18.** Verfahren nach Anspruch 17, **dadurch gekennzeichnet, dass** das erste Reagenz Methyltriethoxysilan (MTEOS) ist.

**19.** Verfahren nach einem der Ansprüche 16 bis 18, **dadurch gekennzeichnet, dass** die molare Beziehung des ersten Reagenz bezüglich des Vorläuferagens variiert von 10/90 zu 50/50 und bevorzugt 20/30.

**20.** Verfahren nach einem der vorangegangenen Ansprüche, **dadurch gekennzeichnet, dass** das Vorläuferagens hydrolysiert und kondensiert ist bzw. wird vor der Einbringung zumindest eines reaktiven Agens, Träger von zumindest einer hydrophoben Gruppe.

**21.** Verfahren nach einem der Ansprüche 16 bis 20, **dadurch gekennzeichnet, dass** der Schritt (b) des Abscheidens des Filmes des Vorläufersols 5 Minuten oder weniger vor der Zuführung des ersten Reagenz in das Vorläufersol erfolgt.

**22.** Verfahren nach einem der Ansprüche 16 bis 21, **dadurch gekennzeichnet dass** das zweite Reagenz, Träger zumindest einer hydrophoben Gruppe einer Siliciumverbindung ist, umfassend eine einzige Funktion, die fähig ist zum Reagieren mit Hydroxylgruppen der mesoporösen Schicht, und vorteilhafter Weise enthaltend zumindest eine Trialkylsilylgruppe, bevorzugt Trimethylsilyl.

**23.** Verfahren nach Anspruch 22, **dadurch gekennzeichnet, dass** das zweite Reagenz ein Chlorsilan, ein Alkoxysilan, bevorzugt das Trimethyl-Methoxysilan ein Fluorsilan, bevorzugt das 3,3,3- Triflourpropyldimethylchlorsilan, ein Disilazan und bevorzugt Hexamethyldisilazan (HMDS) ist.

**24.** Verfahren nach einem der Ansprüche 1 bis 15, **dadurch gekennzeichnet, dass** der Schritt des Einbringens (ii) zumindest eines Reagenz, Träger von zumindest einer hydrophoben Gruppe, ausschließlich das Einbringen in die mesoporöse Schicht nach oder während dem Schritt des Eliminierens (d) des porogenen Agens, von zumindest einem Reagenz, Träger zumindest einer hydrophoben Gruppe enthält, ist.

**25.** Verfahren nach Anspruch 24, **dadurch gekennzeichnet, dass** das Reagenz ausgewählt ist unter den Siliziumverbindungen, umfassend eine einzelne oder einzige Funktion, fähig zum Reagieren mit Hydroxylgruppen der mesoporösen Schicht, und vorteilhafter Weise enthaltend zumindest eine Trialkylsilylgruppe, bevorzugt Trimethylsilyl,

**26.** Verfahren nach Anspruch 24, **dadurch gekennzeichnet, dass** das Reagenz ein Disilazan und bevorzugt, das Hexamethyldisilazan (HMDS) ist.

**27.** Verfahren nach einem der vorangegangenen Ansprüche, **dadurch gekennzeichnet, dass** das Eliminieren des porogenen Agens bei einer Temperatur von $\leq 130°C$ erfolgt.

**28.** Verfahren nach einem der Ansprüche 1 bis 23, **dadurch gekennzeichnet, dass** das Verfahren umfasst:

(ii) einen Schritt des Einbringens zumindest eines reaktiven Agens, Träger zumindest einer hydrophoben Gruppe, vor dem Schritt des Abscheidens b) des Filmes des Vorläufersols und/oder während Schritt d)

**29.** Verfahren nach einem der Ansprüche 1 bis 23, **dadurch gekennzeichnet, dass** das Verfahren umfasst:

(ii) entweder einen Schritt des Einbringen zumindest eines ersten reaktiven Agens, Träger von zumindest einer hydrophoben Gruppe, vor dem Schritt des Abscheidens b) des Filmes des Vorläufersols und dem Einbringen zumindest eines zweien reaktiven Agens, Träger von zumindest einer hydrophoben Gruppe, unterschiedlich zu dem ersten reaktiven Agens, nach Schritt b) und wenn vorliegend nach Schritt c)
oder einen Schritt des Einbringens zumindest eines zweiten reaktiven Agens, Träger von zumindest einer hydrophoben Gruppe, nach oder während Schritt d).

**30.** Verfahren nach einem der Ansprüche 1 bis 23, **dadurch gekennzeichnet, dass** Verfahren umfasst:

(ii) einen Schritt des Einbringens zumindest eines reaktiven Agens, Träger von zumindest einer hydrophoben Gruppe während Schritt d).

**31.** Verfahren nach einem der Ansprüche 1 bis 30, **dadurch gekennzeichnet, dass** die Beschichtungen ausgewählt sind aus den Schlagfestigkeitsprimem, den Kratzfestigkeitsuberzügen, den Entspiegelungsüberzügen,

**32.** Verfahren nach einem der Ansprüche 1 bis 30, **dadurch gekennzeichnet, dass** die mesoporöse Schicht gebildet ist bzw, wird an einer Schicht mit hohem Brechungsindex ($n > 1,50$), vorteilhafter Weise abgeschieden an der Fläche des Substrates, wobei die mesoporöse Schicht einen niedrigen Brechungsindex ($n \leq 1,50$) hat, sodass die Kombination der Schicht mit hohem Brechungsindex und der mesoporösen Schicht eine zweischichtige oder eine mehrschichtige Entspiegelungs- bzw. Antireflexschicht bildet.

**33.** Verfahren nach einem der vorgegangenen Ansprüche, **dadurch gekennzeichnet, dass** die mesoporöse Schicht beschichtet oder versehen ist mit einem hydrophoben Film und/oder einem oleophoben Film.

**34.** Verfahren nach einem der vorangegangenen Ansprüche, **dadurch gekennzeichnet, dass** das Substrat eine ophthalmische Linse ist.

**35.** Ophthalmische Linse, umfassend ein transparentes Substrat, aufweisend eine Hauptfläche, die beschichtet oder versehen ist mit einer mesoporösen Schicht, deren Brechungsindex stabil über die Zeit ist, fähig erhalten zu werden durch ein Verfahren nach einem der Ansprüche 1 bis 30.

**36.** Ophthalmische Linse nach Anspruch 35, **dadurch gekennzeichnet, dass** die mesoporöse Schicht einen Brechungsindex n ≤ 1,50, bevorzugt von ≤ 1,35 aufweist.

**37.** Ophthalmische Linse nach Anspruch 35 oder 36, **dadurch gekennzeichnet, dass** die mesoporöse Schicht die Schicht mit niedrigem Brechungsindex einer zweischichtigen oder mehrschichtigen Entspiegelungsbeschichtung oder eines Bragg-Spiegels bildet

**38.** Ophthalmische Linse nach einem der Ansprüche 35 bis 37, **dadurch gekennzeichnet, dass** die mesoporöse Schicht abgeschieden ist an einer anti-abrasions oder kratzfesten Beschichtung.

**39.** Ophthalmische Linse nach einem der Ansprüche 35 bis 38, **dadurch gekennzeichnet, dass** die mesoporöse Schicht einen niederen Brechungsindex (n ≤ 1,50) aufweist, und **dadurch**, dass sie abgeschieden ist an einer Schicht mit hohem Brechungsindex (n > 1,50), gebildet an der Hauptfläche des Substrates und ausbildend mit der Schicht mit hohem Index eine zweischichtige oder mehrschichtige Antireflex- oder Entspiegelungsbeschichtung.

**40.** Ophthalmische Linse nach Anspruch 39, **dadurch gekennzeichnet, dass** die Schicht mit hohem Brechungsindex selbst gebildet ist an einer kratzfesten bzw. antiabrasiven Beschichtung, gebildet an der Hauptfläche des Substrates.

**41.** Ophthalmische Linse nach einem der Ansprüche 35 bis 40, **dadurch gekennzeichnet, dass** die mesoporöse Schicht selbst beschichtet ist mit einer hydrophoben Schicht und/oder einer oleophoben Schicht.

**42.** Ophthalmische Linse nach einem der Ansprüche 35 bis 41, **dadurch gekennzeichnet, dass** das Substrat ein organisches Material ist.

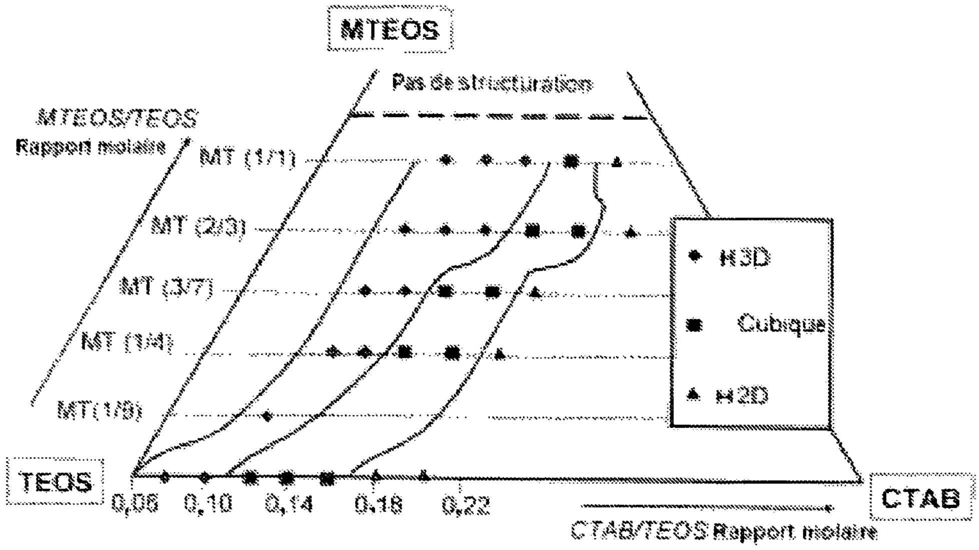
MTEOS
Pas de structuration
MTEOS/TEOS
Rapport molaire
MT (1/1)
MT (2/3)
MT (3/7)
MT (1/4)
MT(1/9)
H3D
Cubique
H2D
TEOS
0,06
0,10
0,14
0,18
0,22
CTAB
CTAB/TEOS Rapport molaire

Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5858457 A
- WO 03024869 A
- US 2003157311 A
- WO 9909383 A
- FR 2734827 A
- FR 9302649
- US 4211823 A
- US 5015523 A
- US 6277485 B
- US 6183872 B
- WO 9949097 A